(19) Europäisches Patentamt
European Patent Office
Office européen des brevets

(11) EP 4 223 811 A1

(12) EUROPEAN PATENT APPLICATION
published in accordance with Art. 153(4) EPC

(43) Date of publication:
**09.08.2023 Bulletin 2023/32**

(21) Application number: **21874839.0**

(22) Date of filing: **29.06.2021**

(51) International Patent Classification (IPC):
***C08F 290/06*** (2006.01) ***C08F 291/00*** (2006.01)
***B41J 2/01*** (2006.01) ***C09D 11/30*** (2014.01)
***C08G 18/00*** (2006.01) ***C08G 18/08*** (2006.01)
***C08G 18/67*** (2006.01) ***B41M 5/00*** (2006.01)

(52) Cooperative Patent Classification (CPC):
**B41J 2/01; B41M 5/00; C08F 290/06; C08F 291/00; C08G 18/00; C08G 18/08; C08G 18/67; C09D 11/30**

(86) International application number:
**PCT/JP2021/024515**

(87) International publication number:
**WO 2022/070535 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 JP 2020163389**

(71) Applicant: **FUJIFILM Corporation**
**Tokyo 106-8620 (JP)**

(72) Inventors:
- **SEKINE, Shinichiro**
**Ashigarakami-gun, Kanagawa 258-8577 (JP)**
- **SUZUKI, Shota**
**Ashigarakami-gun, Kanagawa 258-8577 (JP)**

(74) Representative: **Klunker IP Patentanwälte PartG mbB**
**Destouchesstraße 68**
**80796 München (DE)**

# (54) AQUEOUS DISPERSION, AND METHOD FOR RECORDING IMAGE

(57) An aqueous dispersion including particles including a polymer P and a polymerizable monomer M and water, wherein the polymer P includes a salt of an anionic group, and of the salt, a content of a salt derived from a neutralizer having a solubility in water at 20°C of 12.5 g/100 mL or less is more than 90 mol%, and an image recording method.

EP 4 223 811 A1

## Description

BACKGROUND OF THE INVENTION

1. Field of the Invention

The present disclosure relates to an aqueous dispersion and an image recording method.

2. Description of the Related Art

In the field of ink compositions, the techniques using a volatile base and a nonvolatile base are known.

For example, WO2019/054019A describes an ink composition containing water and particles including acid groups having been neutralized with a volatile neutralizer having a boiling point of 25°C or more and 250°C or less and a nonvolatile neutralizer having a boiling point of more than 250°C.

SUMMARY OF THE INVENTION

In aqueous dispersions including particles, preservation stability of the particles is in demand. Also in the ink composition described in WO2019/054019A, preservation stability is maintained. However, preservation stability under stricter conditions is in demand in some cases.

An embodiment according to the present invention provides an aqueous dispersion having high preservation stability.

Another embodiment according to the present invention provides an image recording method using an aqueous dispersion having high preservation stability.

Means for achieving such objects includes the following embodiments.

<1> An aqueous dispersion including particles including a polymer P and a polymerizable monomer M; and water, wherein the polymer P includes a salt of an anionic group, and of the salt, a content of a salt derived from a neutralizer having a solubility in water at 20°C of 12.5 g/100 mL or less is more than 90 mol%.

<2> The aqueous dispersion according to <1>, wherein the neutralizer is an amine having a ClogP value of 5.0 or less.

<3> The aqueous dispersion according to <1> or <2>, wherein the neutralizer is an amine, and when a polymer in which the salt of the anionic group included in the polymer P has been converted into the anionic group is defined as a polymer P1, an HSP distance between the amine and the polymer P1 is 4.5 $MPa^{1/2}$ or more.

<4> The aqueous dispersion according to any one of <1> to <3>, wherein, when a polymer in which the salt of the anionic group included in the polymer P has been converted into the anionic group is defined as a polymer P1, an HSP distance between the polymerizable monomer M and the polymer P1 is 12 $MPa^{1/2}$ or less.

<5> The aqueous dispersion according to any one of <1> to <4>, wherein a content of a polymerizable monomer M1 having a ClogP value of 2 or less relative to a total solid content of the particles is 50 mass% or less.

<6> The aqueous dispersion according to any one of <1> to <5>, wherein the polymer P includes at least one bond U species selected from the group consisting of a urethane bond and a urea bond.

<7> The aqueous dispersion according to any one of <1> to <6>, wherein the polymer P has a glass transition temperature of 85°C or less.

<8> The aqueous dispersion according to any one of <1> to <7>, being used as an ink.

<9> An image recording method including a step of applying, onto a substrate, the aqueous dispersion according to any one of <1> to <8>; and a step of irradiating the aqueous dispersion having been applied onto the substrate, with an actinic energy ray.

The present disclosure provides an aqueous dispersion having high preservation stability.

The present disclosure also provides an image recording method using an aqueous dispersion having high preservation stability.

DESCRIPTION OF THE PREFERRED EMBODIMENTS

In the present disclosure, numerical ranges described as "a value 'to' another value" mean ranges including the value and the other value respectively as the minimum value and the maximum value.

In the present disclosure, among numerical ranges described in series, the upper limit value or the lower limit value of a numerical range may be replaced by the upper limit value or the lower limit value of one of other numerical ranges described in series. In the present disclosure, among numerical ranges, the upper limit value or the lower limit

value of a numerical range may be replaced by a value described in Examples.

In the present disclosure, combinations of two or more preferred embodiments are more preferred embodiments.

In the present disclosure, the amount of each of components means, when a plurality of substances belonging to such a component are present, the total amount of the plurality of substances unless otherwise specified.

In the present disclosure, the term "step" includes not only an independent step, but also a step that is not clearly distinguished from another step but that achieves the intended result of the step.

In the present disclosure, "*" in chemical formulas represent bonding sites.

In the present disclosure, the concept of "images" encompasses, in addition to patterned images (such as characters, symbols, and figures), solid images.

In the present disclosure, "light" is a concept that encompasses actinic energy rays such as $\gamma$-rays, $\beta$-rays, electron beams, ultraviolet radiation, and visible radiation.

In the present disclosure, ultraviolet radiation may be referred to as "UV (Ultra Violet) light".

In the present disclosure, light emitted from an LED (Light Emitting Diode) light source may be referred to as "LED light".

In the present disclosure, "(meth)acrylic acid" is a concept that encompasses both of acrylic acid and methacrylic acid; "(meth)acrylate" is a concept that encompasses both of acrylate and methacrylate; and "(meth)acryloyl group" is a concept that encompasses both of an acryloyl group and a methacryloyl group.

In the present disclosure, "(meth)acrylic polymer" is a concept encompassing both of an acrylic polymer and a methacrylic polymer.

In the present disclosure, a polyoxyalkylene group, a urea group, and a urethane group respectively mean a polyoxyalkylene bond, a urea bond, and a urethane bond.

Aqueous dispersion

The aqueous dispersion according to the present disclosure includes particles including a polymer P and a polymerizable monomer M and water, wherein the polymer P includes a salt of an anionic group, and, of the salt, a content of a salt derived from a neutralizer having a solubility in water at 20°C of 12.5 g/100 mL or less is more than 90 mol%. Hereafter, the particles including the polymer P and the polymerizable monomer M will be referred to as "specified particles". The neutralizer having a solubility in water at 20°C of 12.5 g/100 mL or less will be referred to as "very slightly water-soluble neutralizer".

The aqueous dispersion according to the present disclosure has high preservation stability. The reason why the aqueous dispersion according to the present disclosure can provide such advantages has not been clarified, but is inferred by the present inventors as follows.

In the aqueous dispersion according to the present disclosure, the polymer P has a salt of an anionic group and, of the salt, the content of a salt derived from a very slightly water-soluble neutralizer is more than 90 mol%. In the case of using a very slightly water-soluble neutralizer, the polymer can be neutralized in a system not including water and hydrolysis of the polymerizable monomer M and the solvent is suppressed, so that the aqueous dispersion has high preservation stability inferentially. In addition, in the case of using a very slightly water-soluble neutralizer, cations derived from the very slightly water-soluble neutralizer move into the specified particles, to suppress the equilibrium reaction in water and evaporation of the very slightly water-soluble neutralizer from the aqueous dispersion, so that the aqueous dispersion has high preservation stability inferentially.

Hereinafter, components in the aqueous dispersion according to the present disclosure will be described in detail.

Specified particles

The aqueous dispersion according to the present disclosure contains at least one species of particles including the polymer P and the polymerizable monomer M.

The polymerizable monomer M is dispersed in water due to the polymer P and is present in the form of particles in water.

Polymer P

The polymer P included in the aqueous dispersion according to the present disclosure has a salt of an anionic group and may have an anionic group not forming a salt. In the polymer P, all the anionic groups may be neutralized or some of the anionic groups alone may be neutralized.

Examples of the unneutralized anionic groups include a carboxy group, a sulfo group, a sulfuric acid group, a phosphonic acid group, and a phosphoric acid group.

The neutralized anionic group means an anionic group having the form of "salt". Examples of the neutralized

anionic group include salts of carboxy groups, salts of sulfo groups, salts of sulfuric acid groups, salts of phosphonic acid groups, and salts of phosphoric acid groups.

In the polymer P, the salt of an anionic group is preferably at least one selected from the group consisting of salts of carboxy groups and salts of sulfo groups, more preferably a salt of a carboxy group.

The degree of neutralization of anionic groups is, from the viewpoint of preservation stability, preferably 50% to 100%.

In the present disclosure, "degree of neutralization of anionic groups" means, of all the anionic groups, the ratio of the number of moles of neutralized anionic groups to the sum of the number of moles of neutralized anionic groups and the number of moles of unneutralized anionic groups [Number of moles of neutralized anionic groups/(Number of moles of neutralized anionic groups + Number of moles of unneutralized anionic groups)].

When the degree of neutralization of anionic groups is 50% or more, the preservation stability is further improved.

The degree of neutralization of anionic groups is preferably 50% to 95%, more preferably 80% to 95%, still more preferably 90% to 95%.

Neutralized anionic groups (specifically, anionic groups having the form of salts) exhibit basicity. When the anionic groups have a degree of neutralization of 95% or less, hydrolysis of the polymer can be suppressed.

The method of measuring the degree of neutralization of the anionic groups is not particularly limited, and the measurement can be performed by a publicly known method such as neutralization titration or structural analysis. The following is an example of the measurement method.

Method for measuring degree of neutralization

In the present disclosure, the degree of neutralization (%) of the anionic groups can be measured by, for example, the following potentiometric titration method. The measurement apparatus is not particularly limited and, for example, an automatic potentiometric titrator (model: AT-510) manufactured by Kyoto Electronics Manufacturing Co., Ltd. can be suitably used.

Hereinafter, a case where the anionic groups are carboxy groups (-COOH) will be described as an example. Note that, when the anionic groups are groups other than carboxy groups (such as sulfo groups or phosphoric acid groups), the degree of neutralization can be measured such that, in the following descriptions, the carboxy groups are replaced by the groups other than carboxy groups.

First, from an aqueous dispersion serving as the measurement target for the degree of neutralization of anionic groups, components other than particles and water are removed, to prepare an aqueous dispersion of the particles.

The prepared aqueous dispersion (50 g) is subjected to centrifugation under conditions of 80000 rpm (revolutions per seconds) and 40 minutes. The supernatant provided by the centrifugation is removed and the particles are collected as the precipitate.

Into Container 1, about 0.5 g of the collected particles are weighed out, and the weighed value W1 (g) is recorded. Subsequently, a mixed solution of 54 mL of tetrahydrofuran (THF) and 6 mL of distilled water is added to dilute the particles having been weighed out, to thereby obtain Degree-of-neutralization-measurement sample 1.

The obtained Degree-of-neutralization-measurement sample 1 is titrated using, as the titrant, a 0.1 N (= 0.1 mol/L) aqueous sodium hydroxide solution, and the titrant volume consumed until the equivalence point is recorded as F1 (mL). When the titration provides a plurality of equivalence points, the value at an equivalence point corresponding to the maximum titrant volume is used. The term "maximum titrant volume F1 (mL)" used herein corresponds to, of the anionic groups included in the particles, the amount of unneutralized anionic groups (specifically, -COOH).

In addition, into Container 2, about 0.5 g of the collected particles are weighed out, and the weighed value W2 (g) is recorded. Subsequently, 60 mL of acetic acid is added to dilute the particles having been weighed out, to thereby obtain Degree-of-neutralization-measurement sample 2.

The obtained Degree-of-neutralization-measurement sample 2 is titrated using, as a titrant, a 0.1 N (= 0.1 mol/L) solution of perchloric acid in acetic acid, and the titrant volume consumed until the equivalence point is recorded as F2 (mL). When the titration provides a plurality of equivalence points, the value at an equivalence point corresponding to the maximum titrant volume is used. The term "maximum titrant volume F2 (mL)" used herein corresponds to, of the anionic groups included in the particles, the amount of neutralized acid groups (specifically, -COONa).

On the basis of the measured values "F1 (mL)" and "F2 (mL)", the following formulas are used to determine the degree of neutralization (%) of the carboxy groups serving as anionic groups.

F1 (mL) × Normality of aqueous sodium hydroxide solution (0.1 mol/L)/W1 (g) + F2 (mL) × Normality of solution of perchloric acid in acetic acid (0.1 mol/L)/W2 (g) = Amount of carboxy groups included in 1 g of particles (mmol/g) (1)

$$F2\ (mL) \times \text{Normality of solution of perchloric acid in acetic acid } (0.1\ mol/L)/W2\ (g) = \text{Amount of neutralized carboxy groups of carboxy groups included in 1 g of particles } (mmol/g)\quad (2)$$

$$\text{Degree of neutralization } (\%) = (2)/(1) \times 100$$

The acid value of the specified particles is, from the viewpoint of dispersion stability of the particles, preferably 0.05 mmol/g to 4.00 mmol/g, more preferably 0.15 mmol/g to 3.00 mmol/g. The acid value means the number of millimoles of anionic groups in 1 g the particles (for example, the total number of millimoles of carboxy groups and salts of carboxy groups).

In the present disclosure, of the salt of anionic groups in the polymer P, the content of the salt derived from the very slightly water-soluble neutralizer is more than 90 mol%.

When, of the salt of anionic groups in the polymer P, the content of the salt derived from the very slightly water-soluble neutralizer is more than 90 mol%, high preservation stability is provided. From the viewpoint of further improving the preservation stability, the content is preferably more than 95 mol%. The upper limit value of the content is not particularly limited, and may be 100 mol%. In other words, all the salts of anionic groups in the polymer P may be salts neutralized with the very slightly water-soluble neutralizer.

The method of measuring, of the salt of anionic groups in the polymer P, the content of the salt derived from the very slightly water-soluble neutralizer is not particularly limited, and the measurement can be performed by a publicly known method such as neutralization titration or structural analysis. The following is an example of the measurement method.

In the present disclosure, of the salts of anionic groups in the polymer P, the content of the salt derived from the very slightly water-soluble neutralizer can be measured by, for example, the following potentiometric titration method. The measurement apparatus is not particularly limited and, for example, an automatic potentiometric titrator (model: AT-510) manufactured by Kyoto Electronics Manufacturing Co., Ltd. can be suitably used.

First, from the aqueous dispersion serving as the measurement target, components other than particles and water are removed, to prepare an aqueous dispersion of the particles.

The aqueous dispersion prepared (50 g) is subjected to centrifugation under conditions of 80000 rpm and 40 minutes. The supernatant provided by the centrifugation is removed and the particles are collected as the precipitate.

Into Container 1, about 0.5 g of the collected particles are weighed out, and the weighed value W1 (g) is recorded. Subsequently, 60 mL of acetic acid is added, to dilute the particles having been weighed out, to thereby obtain Degree-of-neutralization-measurement sample 1.

The obtained Degree-of-neutralization-measurement sample 1 is titrated using, as a titrant, a 0.1 N (= 0.1 mol/L) solution of perchloric acid in acetic acid, and the titrant volume consumed until the equivalence point is recorded as F1 (mL). Furthermore, the titration is continuously performed, and the titrant volume consumed until the second equivalence point is recorded as F2 (mL).

The term "F1 (mL)" used herein corresponds to the number of moles of anionic groups neutralized with a very slightly water-soluble neutralizer that is a strong base, and the term "(F2 - F1) (mL)" used herein corresponds to the number of moles of anionic groups neutralized with a very slightly water-soluble neutralizer that is a weak base.

The fact that the polymer included in the particles includes a salt derived from a very slightly water-soluble neutralizer can be confirmed by a combination of the above-described neutralization titration, gas chromatography, and elemental analysis, for example.

The very slightly water-soluble neutralizer is a neutralizer having a solubility in water at 20°C of 12.5 g/100 mL or less. When more than 90 mol% of the salt of anionic groups included in the polymer is accounted for by a salt derived from the very slightly water-soluble neutralizer, hydrolysis of a component included in the aqueous dispersion, such as the polymerizable monomer M (may include the organic solvent in some cases), is suppressed. In addition, cations derived from the very slightly water-soluble neutralizer are present within the specified particles, to suppress evaporation of the very slightly water-soluble neutralizer. This results in high preservation stability.

From the viewpoint of further improving the preservation stability, the very slightly water-soluble neutralizer preferably has a solubility in water of 5 g/100 mL or less. The lower limit value of the solubility in water of the very slightly water-soluble neutralizer is not particularly limited and is, for example, 1 mg/100 mL.

The species of the very slightly water-soluble neutralizer is not particularly limited, but is preferably, from the viewpoint of water-solubility, an amine.

The amine has a molecular weight of, from the viewpoint of handleability, preferably 20 to 1000, more preferably 30 to 750, still more preferably 50 to 500.

The valence of the amine is not particularly limited, but is, from the viewpoint of dispersion stability, preferably 1. In the present disclosure, "the valence of the amine" means the number of nitrogen atoms included in the amine. When the amine has a valence of 1, aggregation of specified particles due to crosslinking between neutralized anionic groups does not occur, so that dispersion stability of the specified particles is less likely to be degraded.

The very slightly water-soluble neutralizer is preferably an amine having a ClogP value of 5.0 or less. In the present disclosure, the ClogP value is calculated using the fragment method. The calculation software using the fragment method may be, for example, ChemDraw Professioal 16.

When the very slightly water-soluble neutralizer is an amine having a ClogP value of 5.0 or less, ammonium ions forming salts do not excessively move into the particles and the anionic groups are present in the surfaces of the particles, so that electrostatic repulsion between anionic groups provides improved dispersion stability.

Examples of the amine having a ClogP value of 5.0 or less include diisopropylamine, tripropylamine, diisopropylethylamine, diisobutylamine, lauryldiethanolamine, 4-hydroxy-1,2,2,6,6-pentamethylpiperidine, and dicyclohexylmethylamine.

As long as, of the salt of anionic groups in the polymer P, the content of a salt derived from a very slightly water-soluble neutralizer is more than 90 mol%, the salt of anionic groups in the polymer P may include a salt derived from a neutralizer other than very slightly water-soluble neutralizers.

Examples of the neutralizer other than very slightly water-soluble neutralizers include alkali metal hydroxides (such as sodium hydroxide and potassium hydroxide) and triethylamine.

The polymer P may be a chain polymer or may be a crosslinked polymer.

In the present disclosure, the chain polymer means a polymer not having a crosslinked structure, and the crosslinked polymer means a polymer having a crosslinked structure.

The chain polymer may have a ring structure or may have a branched structure.

For the specified particles including the polymer P being a chain polymer, for example, reference can be made to JP6584677B.

When the polymer P is a crosslinked polymer, a preferred example of the specified particles is microcapsules including a shell formed of the polymer P being a crosslinked polymer and a core including a polymerizable monomer.

For the specified particles including the polymer P being a crosslinked polymer, for example, reference can be made to JP6510681B.

The polymer P is, from the viewpoint of lowering Tg, preferably a chain polymer not having a crosslinked structure (hereafter, also referred to as "chain polymer"). Weight-average molecular weight (Mw)

The polymer P has a weight-average molecular weight (Mw) of preferably 3000 to 200000, more preferably 4000 to 150000, still more preferably 5000 to 100000, yet more preferably 8000 to 80000, still yet more preferably 10000 to 50000.

In the present disclosure, the number-average molecular weight (Mn) and the weight-average molecular weight (Mw) mean polystyrene-equivalent values calculated by gel permeation chromatography (GPC).

As the columns employed, for example, TSKgel (registered trademark) SuperHZM-H, TSKgel (registered trademark) SuperHZ4000, and TSKgel (registered trademark) SuperHZ200 (all are manufactured by Tosoh Corporation) are employed.

Glass transition temperature (Tg)

The polymer P is not particularly limited in terms of glass transition temperature (Tg). From the viewpoint of preservation stability, the polymer P has a Tg of preferably 85°C or less, more preferably 70°C or less, still more preferably 60°C or less.

On the other hand, the polymer P has a Tg of preferably -100°C or more, more preferably -80°C or more, still more preferably -60°C or more.

In the present disclosure, the glass transition temperature (Tg) of the polymer means a value measured by differential scanning calorimetry (DSC).

Specifically, the glass transition temperature is measured in accordance with a method described in JIS K 7121 (1987) or JIS K 6240 (2011).

In the present disclosure, the glass transition temperature is the extrapolated glass transition onset temperature (hereafter, also referred to as Tig).

More specifically, the method of measuring the glass transition temperature will be described.

In the case of determining the glass transition temperature, the apparatus is held at a temperature about 50°C lower than the estimated glass transition temperature of the resin until it becomes stable; subsequently, heating is performed at a heating rate of 20°C/min to a temperature about 30°C higher than the glass transition end temperature, and a differential thermal analysis (DTA) curve or a DSC curve is created.

The extrapolated glass transition onset temperature (Tig), which is the glass transition temperature in the

present disclosure, is determined as the temperature at the point of intersection between a straight line extended from the baseline from the lower-temperature side to the higher-temperature side in the DTA curve or the DSC curve, and a tangent drawn at the maximum gradient of the curve in the stepped change region of glass transition.

When the aqueous dispersion includes two or more polymers P, the glass transition temperature (Tg) of the polymer P means the weighted mean value of the glass transition temperatures of the polymers P.

Examples of the polymer P include urethane polymers, urethane-urea polymers, urea polymers, acrylic polymers, polyesters, polyolefins, polystyrenes, polycarbonates, and polyamides.

The urethane polymers mean polymers including a urethane bond and not including a urea bond; the urea polymers mean polymers including a urea bond and not including a urethane bond; the urethane-urea polymers mean polymers including a urethane bond and a urea bond.

The acrylic polymers mean polymers (homopolymers or copolymers) of a raw material monomer including at least one selected from the group consisting of acrylic acid, acrylic acid derivatives (for example, acrylates), methacrylic acid, and methacrylic acid derivatives (for example, methacrylates).

Bond U

The polymer P preferably includes a bond U, which is at least one of a urethane bond or a urea bond. Stated another way, the polymer P is preferably a urethane polymer, a urethane-urea polymer, or a urea polymer.

When the polymer P includes the bond U, in the aqueous dispersion having landed to the substrate, the interaction between bonds U (for example, hydrogen bonds) tend to cause the interaction between specified particles. Thus, the polymerizable monomer M having seeped out from the specified particles polymerizes, which facilitates bonding between specified particles. This facilitates curing between specified particles, so that the rubfastness of the image is further improved.

The bond U preferably includes a urethane bond.

Stated another way, the polymer P preferably includes a urethane bond but does not include a urea bond, or preferably includes a urethane bond and a urea bond.

Polymerizable group

The specified particles include, in addition to the polymer P, the polymerizable monomer M described later (specifically, a compound including a polymerizable group). The polymerizable monomer M contributes to improvement in the rubfastness of the film. Thus, the polymer P does not necessarily include a polymerizable group.

However, from the viewpoint of further improving the rubfastness of the film, the polymer P may include a polymerizable group.

The polymerizable group that can be included in the polymer P is preferably a photopolymerizable group or a thermal-polymerizable group.

The photopolymerizable group is preferably a radical-polymerizable group, more preferably a group including an ethylenically double bond, still more preferably a (meth)acryloyl group, an allyl group, a styryl group, or a vinyl group. The radical-polymerizable group is, from the viewpoint of radical polymerization reactivity and the hardness of a film to be formed, particularly preferably a (meth)acryloyl group.

The thermal-polymerizable group is preferably an epoxy group, an oxetanyl group, an aziridinyl group, an azetidinyl group, a ketone group, an aldehyde group, or a blocked isocyanate group.

The polymer P may contain a single species of a polymerizable group alone, or may contain two or more species of polymerizable groups.

The fact that the polymer P includes such a polymerizable group can be confirmed by, for example, Fourier transform infrared spectroscopy (FT-IR) analysis.

When the number of millimoles of ethylenically double bonds in 1 g of the polymer P is defined as the C=C value of the polymer P, the C=C value of the polymer P is, from the viewpoint of further improving the hardness of the image, preferably 0.05 mmol or more, more preferably 0.10 mmol/g or more, still more preferably 0.30 mmol/g or more, particularly preferably 0.50 mmol/g or more.

The C=C value of the polymer P is, from the viewpoint of further improving the water resistance and alcohol resistance of the image, preferably 0.05 mmol or more, more preferably 0.10 mmol/g or more, still more preferably 0.30 mmol/g or more, yet more preferably 0.50 mmol/g or more, still yet more preferably 0.60 mmol/g or more, particularly preferably 0.70 mmol/g or more.

On the other hand, from the viewpoint of improving the curability of the aqueous dispersion, the C=C value of the polymer P is preferably 4.00 mmol/g or less, more preferably 3.00 mmol/g or less, still more preferably 2.00 mmol/g or less, particularly preferably 1.50 mmol/g or less.

The polymer P may include another structure other than the above-described structures (specifically, the bond

U, the anionic group, and the polymerizable group).

Examples of the other structure include polysiloxane bonds (specifically, divalent polysiloxane groups), monovalent polysiloxane groups, monovalent fluorinated hydrocarbon groups, and divalent fluorinated hydrocarbon groups.

Preferred structure of polymer P

The polymer P preferably includes a structural unit derived from an isocyanate compound (hereafter, also referred to as "NCO"), and a structural unit derived from a compound including an active hydrogen group.

The polymer P of the preferred example includes a bond U formed by a reaction between an isocyanate group of an isocyanate compound and an active hydrogen group in a compound including an active hydrogen group.

The active hydrogen group is preferably a hydroxy group, a primary amino group, or a secondary amino group.

For example, a reaction between an isocyanate group and a hydroxy group forms a urethane group.

Alternatively, a reaction between an isocyanate group and a primary amino group or a secondary amino group forms a urea group.

Hereafter, the isocyanate compound and the compound including an active hydrogen group that serve as raw materials for the polymer P having the preferred structure may be referred to as raw material compounds.

As such a raw material compound, the isocyanate compound may be a single compound alone or may be two or more compounds.

As such a raw material compound, the compound including an active hydrogen group may be a single compound alone or may be two or more compounds.

At least one isocyanate compound serving as a raw material compound is preferably a bi- or higher functional isocyanate compound.

At least one compound including an active hydrogen group and serving as a raw material compound is preferably a compound including two or more active hydrogen groups.

Of the raw material compounds, at least one of the isocyanate compound or the compound including an active hydrogen group preferably includes an anionic group. This facilitates production of the polymer P including an anionic group. In this case, in the finally obtained polymer P, at least some groups of the anionic groups may be provided by neutralization of anionic groups of a raw material compound.

In a more preferred example, of the raw material compounds, at least one compound including an active hydrogen group is a compound including an active hydrogen group and an anionic group.

When the polymer P includes a polymerizable group, of the raw material compounds, at least one of the isocyanate compound or the compound including an active hydrogen group preferably includes a polymerizable group. This facilitates production of the polymer P including a polymerizable group.

In a more preferred example, of the raw material compounds, at least one compound including an active hydrogen group is a compound including an active hydrogen group and a polymerizable group.

As described above, the polymer P may be a chain polymer or may be a crosslinked polymer.

The chain polymer serving as the polymer P can be produced by causing a reaction between a bifunctional isocyanate compound and a compound including two active hydrogen groups.

The crosslinked polymer serving as the polymer P can be produced by causing a reaction between a tri- or higher functional isocyanate compound and a compound including two or more active hydrogen groups.

The crosslinked polymer serving as the polymer P can also be produced by causing a reaction between a bifunctional isocyanate compound and a compound including three or more active hydrogen groups.

Hereinafter, preferred raw material compounds will be described.

Isocyanate compound

The isocyanate compound is preferably a bi- or higher functional isocyanate compound, more preferably a bifunctional to hexafunctional isocyanate compound.

In the case of using, as a raw material compound, a bifunctional isocyanate compound, the polymer P preferably includes a structural unit derived from the bifunctional isocyanate compound, the following structural unit (P1).

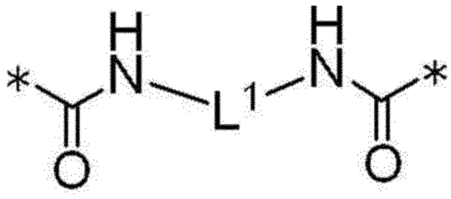

(P1)

In the structural unit (P1), $L^1$ represents a divalent organic group having 1 to 20 carbon atoms, and * represent bonding sites.

Specific examples of $L^1$ include residues provided by removing two isocyanate groups (NCO groups) from the following specific examples of the bifunctional isocyanate compound.

Specific examples of the bifunctional isocyanate compound are as follows. However, the bifunctional isocyanate compound is not limited to the following specific examples.

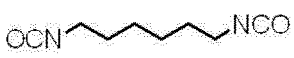

HDI

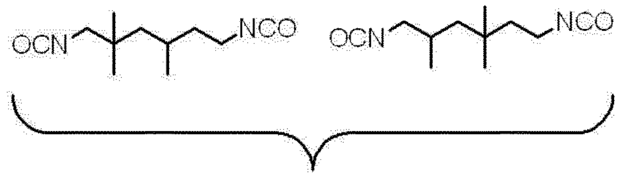

TMHDI

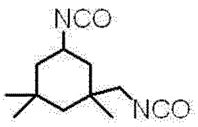

IPDI

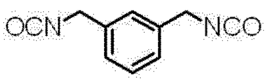

XDI

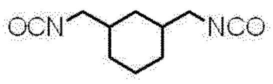

HXDI

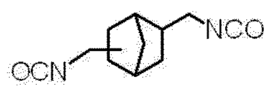

NBDI

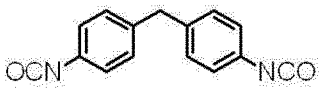

MDI

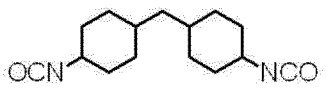

HMDI

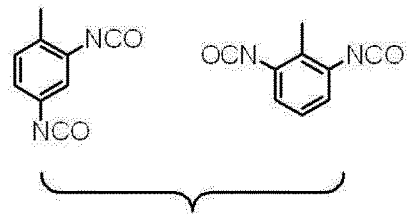

TDI

As the bifunctional isocyanate compound, bifunctional isocyanate compounds derived from the above-described specific examples are also usable. Examples include DURANATE (registered trademark) D 101, D201, and A101 (manufactured by Asahi Kasei Corporation).

The tri- or higher functional isocyanate compound is preferably a reaction product of at least one selected from the group consisting of bifunctional isocyanate compounds and at least one selected from the group consisting of compounds including three or more active hydrogen groups (for example, tri- or higher functional polyol compounds, tri- or higher functional polyamine compounds, and tri- or higher functional polythiol compounds).

The number of moles (number of molecules) of the bifunctional isocyanate compound caused to react with the compound including three or more active hydrogen groups is preferably 0.6 times or more, more preferably 0.6 times to 5 times, still more preferably 0.6 times to 3 times, yet more preferably 0.8 times to 2 times the number of moles of active hydrogen groups (the number of equivalents of active hydrogen groups) of the compound including three or more active hydrogen groups.

Examples of the bifunctional isocyanate compound for forming the tri- or higher functional isocyanate compound include the bifunctional isocyanate compounds described above as specific examples.

Examples of the compound including three or more active hydrogen groups for forming the tri- or higher functional

isocyanate compound include compounds described in Paragraphs 0057 to 0058 in WO2016/052053A.

Examples of the tri- or higher functional isocyanate compound include adduct-type tri- or higher functional isocyanate compounds, isocyanurate-type tri- or higher functional isocyanate compounds, and biuret-type tri- or higher functional isocyanate compounds.

Examples of the commercially available products of the adduct-type tri- or higher functional isocyanate compounds include TAKENATE (registered trademark) D-102, D-103, D-103H, D-103M2, P49-75S, D-110N, D-120N, D-140N, D-160N (all from Mitsui Chemicals, Inc.), DESMODUR (registered trademark) L75, UL57SP (Sumika Bayer Urethane Co., Ltd.), CORONATE (registered trademark) HL, HX, L (Nippon Urethane Polymer Co., Ltd.), and P301-75E (Asahi Kasei Corporation).

Examples of the commercially available products of the isocyanurate-type tri- or higher functional isocyanate compounds include TAKENATE (registered trademark) D-127N, D-170N, D-170HN, D-172N, D-177N (all from Mitsui Chemicals, Inc.), SUMIDUR N3300, DESMODUR (registered trademark) N3600, N3900, Z4470BA (all from Sumika Bayer Urethane Co., Ltd.), CORONATE (registered trademark) HX, HK (all from Nippon Urethane Polymer Co., Ltd.), and DURANATE (registered trademark) TPA-100, TKA-100, TSA-100, TSS-100, TLA-100, and TSE-100 (all from Asahi Kasei Corporation).

Examples of the commercially available products of the biuret-type tri- or higher functional isocyanate compounds include TAKENATE (registered trademark) D-165N, NP1100 (all from Mitsui Chemicals, Inc.), DESMODUR (registered trademark) N3200 (Sumika Bayer Urethane Co., Ltd.), and DURANATE (registered trademark) 24A-100 (Asahi Kasei Corporation).

At least one isocyanate compound serving as a raw material compound may be an isocyanate compound including an anionic group. For the isocyanate compound including an anionic group, reference can be made to Paragraphs 0112 to 0118 and Paragraphs 0252 to 0254 of WO2016/052053A.

At least one isocyanate compound serving as a raw material compound may be an isocyanate compound including a polymerizable group. For the isocyanate compound including a polymerizable group, reference can be made to Paragraphs 0084 to 0089, 0203, and 0205 of WO2016/052053A.

Compound including active hydrogen group

The compound including an active hydrogen group is preferably a compound including two or more active hydrogen groups.

The compound including two or more active hydrogen groups is more preferably a polyol compound (specifically, a compound having two or more hydroxy groups) or a polyamine compound (specifically, a compound having two or more amino groups).

In the case of using, as a raw material compound, the compound including an active hydrogen group and an anionic group, the polymer P preferably includes at least one species of the following structural unit (P0).

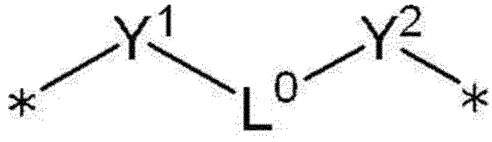

(P0)

In the structural unit (P0),

$L^0$ represents a divalent organic group,
* represent bonding sites,
$Y^1$ and $Y^2$ each independently represent an oxygen atom, a sulfur atom, or a $-NR^1-$ group,
$R^1$ represents a hydrogen atom or a hydrocarbon group having 1 to 10 carbon atoms, and
* represent bonding sites.

In the structural unit (P0), the divalent organic group represented by $L^0$ may be a group composed of carbon atoms and hydrogen atoms, or may be a group including carbon atoms and hydrogen atoms and further including a heteroatom (for example, an oxygen atom, a nitrogen atom, or a sulfur atom).

Specific examples of $L^0$ include residues provided by removing two active hydrogen groups from specific

examples of the compound including two or more active hydrogen groups described later.

$R^1$ is preferably a hydrogen atom or a hydrocarbon group having 1 to 6 carbon atoms, more preferably a hydrogen atom or a hydrocarbon group having 1 to 3 carbon atoms.

$Y^1$ and $Y^2$ are each independently preferably an oxygen atom or a $-NR^1-$ group, more preferably an oxygen atom.

The following are specific examples of diol compounds serving as compounds including an active hydrogen group; however, the compound including an active hydrogen group is not limited to the following specific examples.

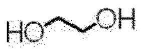
(1)
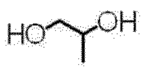
(2)
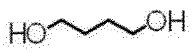
(3)
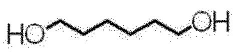
(4)
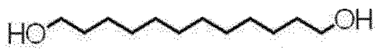
(5)

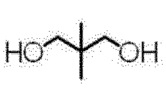
(6)
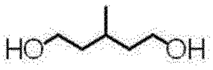
(7)
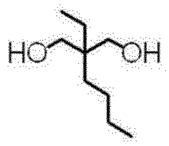
(8)
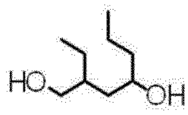
(9)
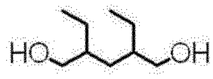
(10)

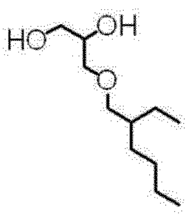
(11)
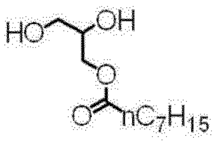
(12)
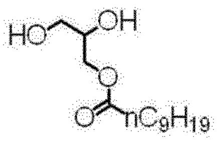
(13)
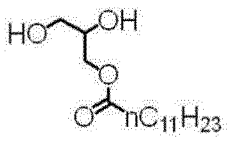
(14)
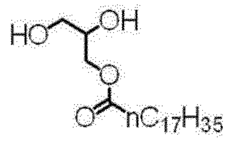
(15)

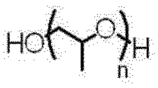
(16)
PPG
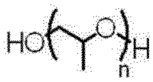
(16-2)
PEG
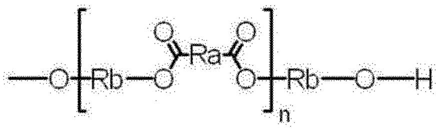
(17)
PEs
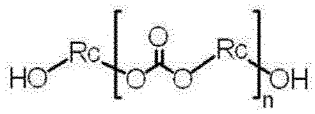
(18)
PCD

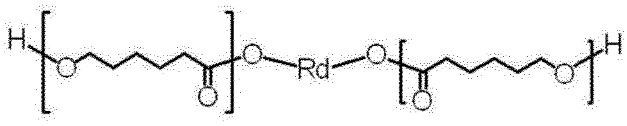
(19)
PCL
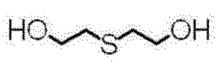
(20)
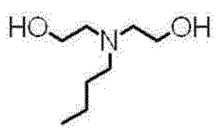
(21)

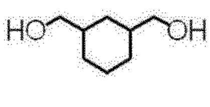
(22)
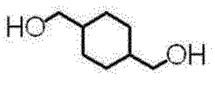
(23)
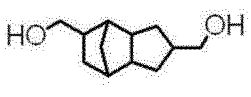
(24)
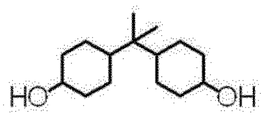
(25)

In Compounds (12) to (15), $nC_7H_{15}$, $nC_9H_{19}$, $nC_{11}H_{23}$, and $nC_{17}H_{35}$ respectively represent a normal heptyl group, a normal nonyl group, a normal undecyl group, and a normal heptadecyl group.

Compound (16) PPG is a polypropylene glycol where n is the repeat number.

Compound (16-2) PEG is a polyethylene glycol where n is the repeat number.

Compound (17) PEs is a polyester diol where n is the repeat number, and Ra and two Rb's are each independently a divalent hydrocarbon group having 2 to 25 carbon atoms. In Compound (17) PEs, n Ra's may be the same or different. In Compound (17) PEs, (n + 1) Rb's may be the same or different.

Compound (18) PCD is a polycarbonatediol where n is the repeat number, and (n + 1) Rc's are each independently an alkylene group having 2 to 12 (preferably 3 to 8, more preferably 3 to 6) carbon atoms. In Compound (18) PC, (n + 1) Rc's may be the same or different.

Compound (19) PCL is a polycaprolactonediol where n and m are the repeat numbers, and Rd is an alkylene group having 2 to 25 carbon atoms.

In particular, the compound including an active hydrogen group is, from the viewpoint of lowering Tg of the polymer P, preferably Compounds (11) to (19).

Compound including active hydrogen group and polymerizable group

The compound including an active hydrogen group may also be a compound including an active hydrogen group and a polymerizable group.

The compound including an active hydrogen group and a polymerizable group is suitable as a compound for introducing a polymerizable group into the polymer P (hereafter, also referred to as "polymerizable-group-introducing compound").

The following are specific examples of diol compounds serving as compounds including an active hydrogen group and a polymerizable group; however, the compound including an active hydrogen group and a polymerizable group is not limited to the following specific examples.

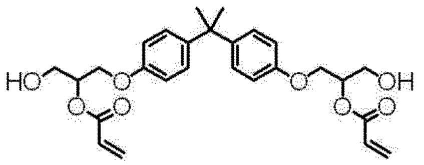

(26)

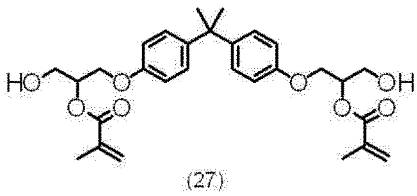

(27)

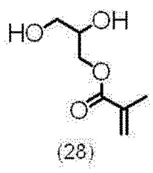

(28)

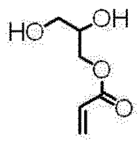

(29)

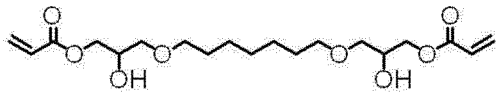

(30)

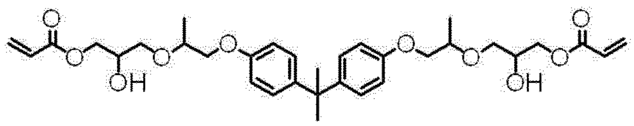

(31)

DA-250

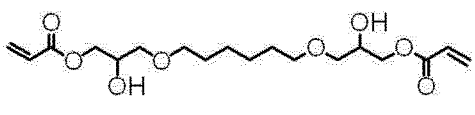

(32)

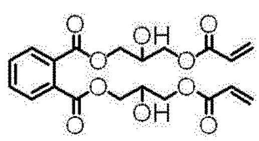

(33)

DA-721

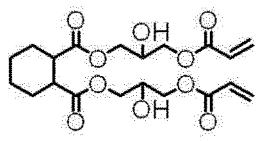

(34)

DA-722

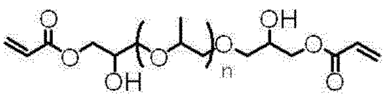

(35) n=1

DA-911M

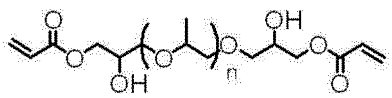

(36) n=3

DA-920

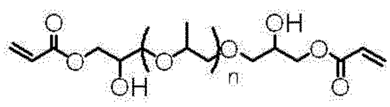

(37) n=11

DA-931

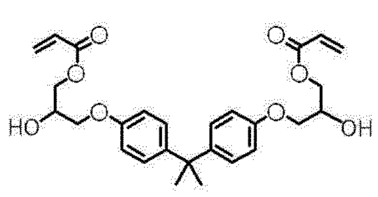

(38)

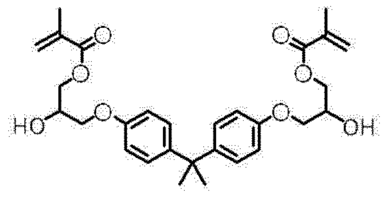

(39)

For the compound including an active hydrogen group and a polymerizable group, reference may be appropriately made to the descriptions of Paragraphs 0075 to 0089 of WO2016/052053A.

Compound including active hydrogen group and anionic group

The compound including an active hydrogen group may also be a compound including an active hydrogen group and an anionic group.

The compound including an active hydrogen group and an anionic group is suitable as a compound for introducing an anionic group into the polymer P (hereafter, also referred to as "anionic-group-introducing compound").

In the case of using, as a raw material compound, the compound including an active hydrogen group and an anionic group, the polymer P preferably includes the following structural unit (P2).

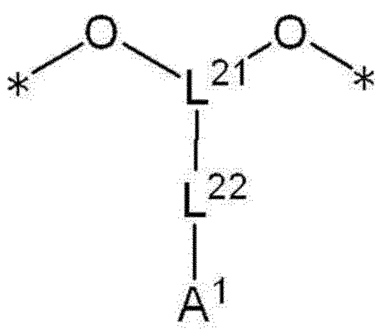

(P2)

In the structural unit (P2),

$L^{21}$ represents a trivalent organic group having 1 to 20 carbon atoms,
$L^{22}$ represents a single bond or a divalent organic group having 1 to 20 carbon atoms,
$A^1$ represents a carboxy group, a salt of a carboxy group, a sulfo group, or a salt of a sulfo group, and
* represent bonding sites.

In the trivalent organic group having 1 to 20 carbon atoms represented by $L^{21}$, the number of carbon atoms is preferably 2 to 20, more preferably 3 to 20, still more preferably 4 to 20.

The trivalent organic group represented by $L^{21}$ is preferably a trivalent hydrocarbon group or a group in which at least one carbon atom in a trivalent hydrocarbon group is replaced by a heteroatom (preferably an oxygen atom, a sulfur atom, or a nitrogen atom).

In the divalent organic group having 1 to 20 carbon atoms represented by $L^{22}$, the number of carbon atoms is preferably 1 to 10, more preferably 1 to 6.

The divalent organic group represented by $L^{22}$ is preferably a divalent hydrocarbon group (preferably an alkylene group) or a group in which at least one carbon atom in a divalent hydrocarbon group (preferably an alkylene group) is replaced by an oxygen atom or a sulfur atom (preferably an oxygen atom).

$L^{22}$ may be a single bond.

The following are specific examples of the compound including an active hydrogen group and an anionic group; however, the compound including an active hydrogen group and an anionic group is not limited to the following specific examples. In the following specific examples, the carboxy groups and the sulfo group may be neutralized (specifically, may be salts of carboxy groups and a salt of a sulfo group).

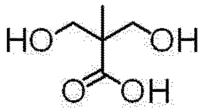
DMPA

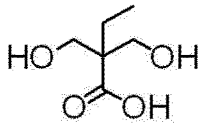
DMBA

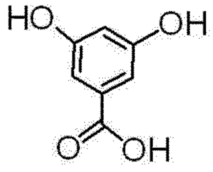
DHBA

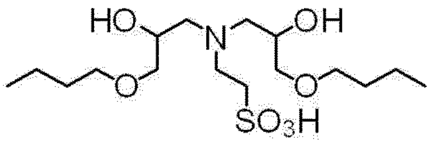
DSO

For the compound including an active hydrogen group and an anionic group, reference can be appropriately made to the descriptions of Paragraphs 0112 to 0118 and Paragraphs 0252 to 0254 of WO2016/052053A.

The polymer P content relative to the total solid content of the specified particles is, from the viewpoint of dispersion stability, preferably 10 mass% to 90 mass%, more preferably 20 mass% to 80 mass%, still more preferably 30 mass% to 70 mass%.

In the present disclosure, the total solid content of the specified particles means the total amount of the specified particles except for the solvent (specifically, water and the organic solvent). When the specified particles do not include solvents, the total solid content of the specified particles is the same as the total amount of the specified particles.

Polymerizable monomer M

The specified particles include at least one species of the polymerizable monomer M.

The polymerizable monomer M, during curing of the aqueous dispersion having been applied onto the substrate, bond together the specified particles to contribute to improvement in the rubfastness of the image.

The specified particles may include a single species of the polymerizable monomer M alone or two or more species of the polymerizable monomer M.

As the polymerizable monomer M included in the specified particles, the compounds described in Paragraphs 0097 to 0105 in WO2016/052053A may be used.

The polymerizable monomer M has a molecular weight of preferably 100 to 4000, still more preferably 100 to 2000, yet more preferably 100 to 1000, still yet more preferably 100 to 900, even yet more preferably 100 to 800, particularly preferably 150 to 750.

The radical-polymerizable monomer has a radical-polymerizable group in the molecular structure.

Preferred examples of the radical-polymerizable group of the radical-polymerizable monomer are the same as the above-described preferred examples of the radical-polymerizable group that the polymer P can include.

Examples of the radical-polymerizable monomer include acrylate compounds, methacrylate compounds, styrene compounds, vinylnaphthalene compounds, N-vinyl heterocyclic compounds, unsaturated polyesters, unsaturated polyethers, unsaturated polyamides, and unsaturated urethanes.

The radical-polymerizable monomer is preferably a compound having an ethylenically unsaturated group.

When the specified particles include the radical-polymerizable monomer, the specified particles may include a single species of a radical-polymerizable monomer alone, or may include two or more species of radical-polymerizable monomers.

Examples of the acrylate compounds include monofunctional acrylate compounds such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate (PEA), bis(4-acryloxypolyethoxyphenyl)propane, oligoester acrylate, epoxy acrylate, isobornyl acrylate (IBOA), dicyclopentenyl acrylate, dicyclopentenyloxyethyl acrylate, dicyclopentanyl acrylate, cyclic trimethylolpropane formal acrylate, 2-(2-ethoxyethoxy)ethyl acrylate, 2-(2-vinyloxyethoxy)ethyl acrylate, octyl acrylate, decyl acrylate, isodecyl acrylate, lauryl acrylate, 3,3,5-trimethylcyclohexyl acrylate, 4-t-butylcyclohexyl acrylate, isoamyl acrylate, stearyl acrylate, isostearyl acrylate, 2-ethylhexyl diglycol acrylate, 2-hydroxybutyl acrylate, 2-acryloyloxyethyl hydrophthalate, ethoxydiethylene glycol acrylate, methoxydiethylene glycol acrylate, methoxypolyethylene glycol acrylate, methoxypropylene glycol acrylate, 2-hydroxy-3-phenoxypropyl acrylate, vinyl ether acrylate, 2-acryloyloxyethyl succinate, 2-acryloyloxy phthalate, 2-acryloxyethyl-2-hydroxyethyl phthalate, lactone-modified acrylate, acryloylmorpholine, acrylamide, and substituted acrylamides (for example, N-methylolacrylamide and diacetoneacrylamide);

bifunctional acrylate compounds such as polyethylene glycol diacrylate, polypropylene glycol diacrylate, polytetramethylene glycol diacrylate, 1,3-butylene glycol diacrylate, 1,4-butanediol diacrylate, 1,6-hexanediol diacrylate (HDDA), 1,9-nonanediol diacrylate (NDDA), 1,10-decanediol diacrylate (DDDA), 3-methylpentadiol diacrylate (3MPDDA), neopentyl glycol diacrylate, tricyclodecanedimethanol diacrylate, bisphenol A ethylene oxide (EO) adduct diacrylate, bisphenol A propylene oxide (PO) adduct diacrylate, ethoxylated bisphenol A diacrylate, hydroxyneopentyl glycol diacrylate, propoxylated neopentyl glycol diacrylate, alkoxylated dimethyloltricyclodecane diacrylate, polytetramethylene glycol diacrylate, alkoxylated cyclohexanonedimethanol diacrylate, alkoxylated hexanediol diacrylate, dioxane

glycol diacrylate, cyclohexanonedimethanol diacrylate, diethylene glycol diacrylate, neopentyl glycol diacrylate, tetraethylene glycol diacrylate, dipropylene glycol diacrylate, tripropylene glycol diacrylate (TPGDA), and neopentyl glycol propylene oxide adduct diacrylate; and

tri- or higher functional acrylate compounds such as trimethylolpropane triacrylate, pentaerythritol triacrylate, dipentaerythritol tetraacrylate, ethoxylated isocyanurate triacrylate, ε-caprolactone-modified tris-(2-acryloxyethyl) isocyanurate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritolethoxy tetraacrylate, glycerol propoxy triacrylate, ethoxylated dipentaerythritol hexaacrylate, caprolactam-modified dipentaerythritol hexaacrylate, propoxylated glycerol triacrylate, ethoxylated trimethylolpropane triacrylate, and propoxylated trimethylolpropane triacrylate.

Examples of the methacrylate compounds include monofunctional methacrylate compounds such as methyl methacrylate, n-butyl methacrylate, allyl methacrylate, glycidyl methacrylate, benzyl methacrylate, dimethylaminomethyl methacrylate, methoxypolyethylene glycol methacrylate, methoxytriethylene glycol methacrylate, hydroxyethyl methacrylate, phenoxyethyl methacrylate, and cyclohexyl methacrylate; and

bifunctional methacrylate compounds such as polyethylene glycol dimethacrylate, polypropylene glycol dimethacrylate, 2,2-bis(4-methacryloxypolyethoxyphenyl)propane, and tetraethylene glycol dimethacrylate.

Examples of the styrene compounds include styrene, p-methylstyrene, p-methoxystyrene, β-methylstyrene, p-methyl-β-methylstyrene, α-methylstyrene, and p-methoxy-β-methylstyrene.

Examples of the vinylnaphthalene compounds include 1-vinylnaphthalene, methyl-1-vinylnaphthalene, β-methyl-1-vinylnaphthalene, 4-methyl-1-vinylnaphthalene, and 4-methoxy-1-vinylnaphthalene.

Examples of the N-vinylheterocyclic compounds include N-vinylcarbazole, N-vinylpyrrolidone, N-vinylethylacetamide, N-vinylpyrrole, N-vinylphenothiazine, N-vinylacetanilide, N-vinylethylacetamide, N-vinylsuccinimide, N-vinylphthalimide, N-vinylcaprolactam, and N-vinylimidazole.

Other examples of the radical-polymerizable monomer include allyl glycidyl ether, diallyl phthalate, triallyl trimellitate, and N-vinylamides such as N-vinylformamide.

Of these radical-polymerizable monomers, a preferred bi- or lower functional radical-polymerizable monomer is at least one selected from the group consisting of 1,6-hexanediol diacrylate (HDDA), 1,9-nonanediol diacrylate (NDDA), 1,10-decanediol diacrylate (DDDA), 3-methylpentadiol diacrylate (3MPDDA), neopentyl glycol diacrylate, tricyclodecanedimethanol diacrylate, diethylene glycol diacrylate, tetraethylene glycol diacrylate, dipropylene glycol diacrylate, tripropylene glycol diacrylate (TPGDA), cyclohexanonedimethanol diacrylate, alkoxylated hexanediol diacrylate, polyethylene glycol diacrylate, and polypropylene glycol diacrylate.

The tri- or higher functional radical-polymerizable monomer is preferably at least one selected from the group consisting of trimethylolpropane triacrylate, pentaerythritol triacrylate, dipentaerythritol tetraacrylate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritolethoxy tetraacrylate, glycerol propoxy triacrylate, ethoxylated dipentaerythritol hexaacrylate, caprolactam-modified dipentaerythritol hexaacrylate, propoxylated glycerol triacrylate, ethoxylated trimethylolpropane triacrylate, and propoxylated trimethylolpropane triacrylate.

The specified particles may include a combination of a bi- or lower functional radical-polymerizable monomer and a tri- or higher functional radical-polymerizable monomer. In this case, the bi- or lower functional radical-polymerizable monomer mainly further improves the adhesiveness between the film and the substrate, and the tri- or higher functional radical-polymerizable monomer mainly further improves the hardness of the film.

Examples of the combination of a bi- or lower functional radical-polymerizable monomer and a tri- or higher functional radical-polymerizable monomer include a combination of a bifunctional acrylate compound and a trifunctional acrylate compound, a combination of a bifunctional acrylate compound and a pentafunctional acrylate compound, and a combination of a monofunctional acrylate compound and a tetrafunctional acrylate compound.

From the viewpoint of further improving the adhesiveness between the film and the substrate, at least one species of a radical-polymerizable monomer that can be included in the specified particles is preferably a radical-polymerizable monomer having a ring structure (hereafter, also referred to as "cyclic radical-polymerizable monomer").

Examples of the cyclic radical-polymerizable monomer include cyclohexyl acrylate, tetrahydrofurfuryl acrylate, benzyl acrylate, isobornyl acrylate, dicyclopentenyl acrylate, dicyclopentenyloxyethyl acrylate, dicyclopentanyl acrylate, ethoxylated isocyanurate triacrylate, and ε-caprolactone-modified tris-(2-acryloxyethyl) isocyanurate.

Other examples include bi- or higher functional cyclic radical-polymerizable monomers described below.

From the viewpoint of further improving the adhesiveness between the film and the substrate, at least one species of the radical-polymerizable monomer that can be included in the specified particles is preferably a polymerizable monomer including, in a single molecule, one or more ring structures and two or more (meth)acryloyl groups (hereafter, also referred to as "bi- or higher functional cyclic radical-polymerizable monomer").

Examples of the bi- or higher functional cyclic radical-polymerizable monomer include tricyclodecanedimethanol

di(meth)acrylate,

bisphenol A ethylene oxide (EO) adduct di(meth)acrylate,
bisphenol A propylene oxide (PO) adduct di(meth)acrylate, ethoxylated bisphenol A di(meth)acrylate,
alkoxylated dimethyloltricyclodecane di(meth)acrylate,
alkoxylated cyclohexanonedimethanol di(meth)acrylate, and
cyclohexanonedimethanol di(meth)acrylate.

When the specified particles include a radical-polymerizable monomer, the content of the bi- or higher functional cyclic radical-polymerizable monomer relative to the total amount of the radical-polymerizable monomer is preferably 10 mass% to 100 mass%, more preferably 30 mass% to 100 mass%, particularly preferably 40 mass% to 100 mass%.

In addition to the above-described radical-polymerizable monomers, there are other usable radical-polymerizable monomers such as commercially available products described in, for example, "Crosslinking Agent Handbook", edited by Shinzo YAMASHITA (1981, TAISEISHA LTD.); "UV/EB Curing Handbook (Raw Material)", edited by Kiyomi KATO (1985, Kobunshi Kankokai); "Applications and Markets of UV/EB Curing Techniques", edited by RadTech Japan, p. 79 (1989, CMC Publishing Co., Ltd.); and "Polyester Resin Handbook", written by Eiichiro TAKIYAMA (1988, THE NIKKAN KOGYO SHIMBLTN, LTD.); and radical-polymerizable and crosslinkable monomers publicly known in the industry.

The content of the polymerizable monomer M relative to the total solid content of the specified particles is preferably 10 mass% to 90 mass%, more preferably 20 mass% to 80 mass%, still more preferably 30 mass% to 70 mass%, particularly preferably 40 mass% to 60 mass%.

In the aqueous dispersion according to the present disclosure, the content of the polymerizable monomer M1 having a ClogP value of 2 or less relative to the total solid content of the specified particles is preferably 60 mass% or less, more preferably 50 mass% or less, still more preferably 40 mass% or less, particularly preferably 20 mass% or less. The lower limit value of the content of the polymerizable monomer M1 having a ClogP value of 2 or less is not particularly limited and is, for example, 0 mass%. In other words, in the aqueous dispersion according to the present disclosure, the polymerizable monomer M1 having a ClogP value of 2 or less is not necessarily included.

When the content of the polymerizable monomer M1 having a ClogP value of 2 or less relative to the total solid content of the specified particles is 60 mass% or less, during production of the aqueous dispersion, the aqueous layer and the oil layer are easily emulsified and a stable aqueous dispersion is obtained.

Examples of the polymerizable monomer M1 having a ClogP value of 2 or less include the following compounds.

HEA

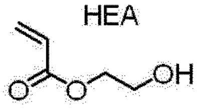

ClogP: -0.0058

HEMA

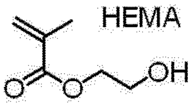

ClogP: 0.3032

4-HBA

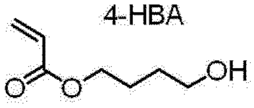

ClogP: 0.397

HPMA

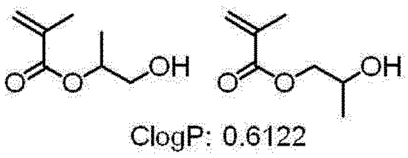

ClogP: 0.6122

GLMMA

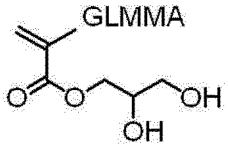

ClogP: -0.522

EGMA

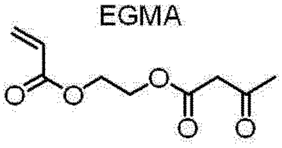

ClogP: 0.5126

EGMMA

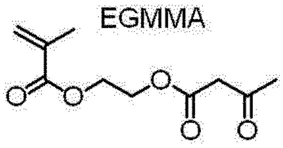

ClogP: 0.8216

CLA

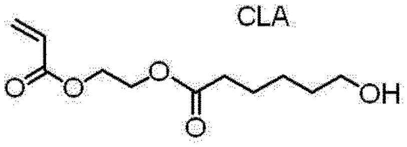

ClogP:1.0198

CLMA

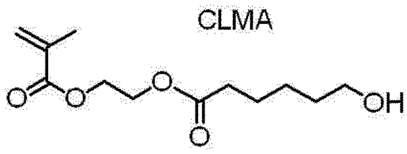

ClogP:1.3288

PPGA

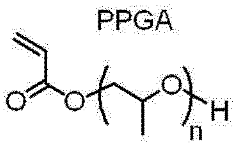

n=4 ClogP:0.9434
n=6 ClogP:1.2102
n=9 ClogP:1.6104

PPGMA

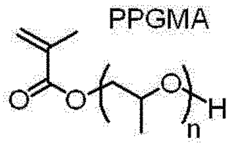

n=4 ClogP:1.2524
n=6 ClogP:1.5192
n=9 ClogP:1.9194

PEGMA

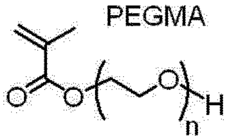

n=4 ClogP:0.0164
n=9 ClogP:-0.8616
n=25 ClogP:-3.6712

DAAm

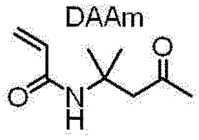

ClogP: 0.289

DMAAm

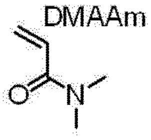

ClogP: -0.167

ACMO

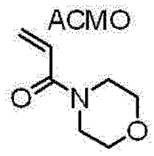

ClogP: -0.068

MAAm

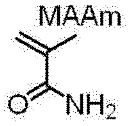

ClogP: -0.3

DMAEMA

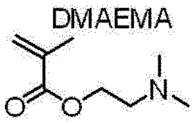

ClogP: 1.275

HEAAm

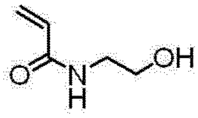

ClogP: -1.027

tBuMAAm

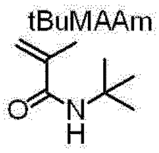

ClogP: 0.963

DMAPMAAm

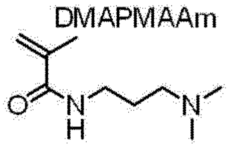

ClogP: 0.505

HPMAAm

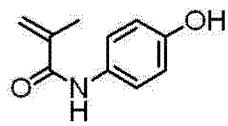

ClogP: 1.058

SHPA

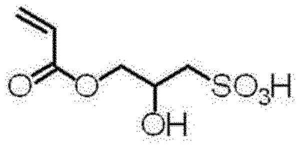

ClogP: -2.059

AMPS

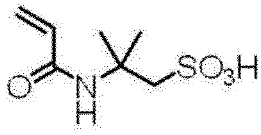

ClogP: -1.547

SEA

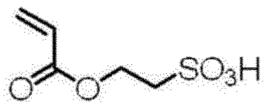

ClogP:-1.234

SPA

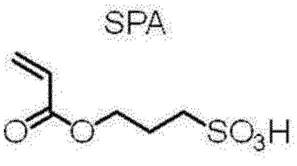

ClogP: -0.956

SEM

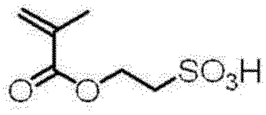

ClogP: -0.925

SPM

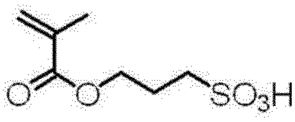

ClogP:-0.647

MMA

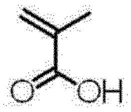

ClogP:0.66

SS

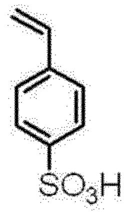

ClogP:0.079

P-1M

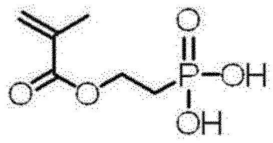

ClogP: -0.111

CEA

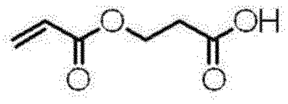

ClogP: 0.42

A-SA

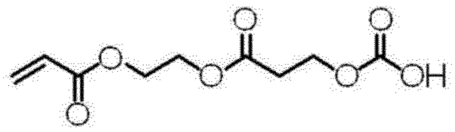

ClogP: 0.16

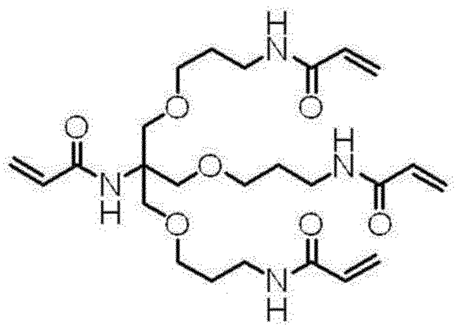

ClogP: -0.2

Radical polymerization initiator

The specified particles may include at least one radical polymerization initiator.

In the present disclosure, the radical polymerization initiator means a compound that absorbs light to generate a radical.

When the specified particles include, as the polymerizable monomer, a radical-polymerizable monomer, the specified particles preferably include at least one radical polymerization initiator.

In this case, the formed film has further improved rubfastness and further improved adhesiveness.

The reason for this is inferred that the radical-polymerizable group in the radical-polymerizable monomer and the radical polymerization initiator are positioned close to each other, which results in improvement in the curing sensitivity of the film (hereafter, also simply referred to as "sensitivity").

When the specified particles include a radical polymerization initiator, radical polymerization initiators that have high sensitivity, but have low dispersibility or low solubility in water and hence have been unsuitable (for example, radical polymerization initiators having a solubility in water at 25°C of 1.0 mass% or less) become usable. This broadens the range of choices of the radical polymerization initiator employed, which also leads to broadening of range of choices of the light source employed. This can provide higher curing sensitivity than before.

Specific examples of the above-described radical polymerization initiators that have high sensitivity, but have low dispersibility or low solubility in water and hence have been unsuitable include carbonyl compounds and acylphosphine oxide compounds described later, and preferred are acylphosphine oxide compounds.

Thus, in the aqueous dispersion and the ink according to the present disclosure, a substance having a low solubility in water can be included in the specified particles, to thereby be contained in the aqueous dispersion according to the present disclosure, which is an aqueous composition.

Such an embodiment of the aqueous dispersion in which the specified particles include a radical polymerization initiator also has higher preservation stability than existing photocurable compositions. The reason for this is inferred that the radical polymerization initiator is included in the specified particles, so that aggregation or sedimentation of the radical polymerization initiator is suppressed.

For the radical polymerization initiator, for example, reference can be appropriately made to the descriptions of Paragraphs 0091 to 0094 of WO2016/052053A.

The radical polymerization initiator is more preferably (a) a carbonyl compound such as an aromatic ketone or (b) an acylphosphine oxide compound; specific examples include bis(2,4,6-trimethylbenzoyl)-phenylphosphine oxide (for example, IRGACURE (registered trademark) 819 manufactured by BASF), 2-(dimethylamine)-1-(4-morpholinophenyl)-2-benzyl-1-butanone (for example, IRGACURE (registered trademark) 369 manufactured by BASF), 2-methyl-1-(4-methylthiophenyl)-2-morpholinopropan-1-one (for example, IRGACURE (registered trademark) 907 manufactured by BASF), 1-hydroxy-cyclohexylphenyl-ketone (for example, IRGACURE (registered trademark) 184 manufactured by BASF), and 2,4,6-trimethylbenzoyl-diphenyl-phosphine oxide (for example, DAROCUR (registered trademark) TPO and LUCIRIN (registered trademark) TPO (both are manufactured by BASF)).

Of these, from the viewpoints of, for example, improving the sensitivity and suitability for LED light, the radical-polymerization initiator is preferably (b) the acylphosphine oxide compound, more preferably a monoacylphosphine oxide compound (particularly preferably 2,4,6-trimethylbenzoyl-diphenyl-phosphine oxide) or a bisacylphosphine oxide compound (particularly preferably bis(2,4,6-trimethylbenzoyl)-phenylphosphine oxide).

The LED light preferably has a wavelength of 355 nm, 365 nm, 385 nm, 395 nm, or 405 nm.

The form of the specified particles including a radical polymerization initiator can be produced by, for example, emulsifying a mixture provided by mixing together an oil-phase component including the polymer P (or the raw material compounds for producing the polymer P), a radical-polymerizable monomer, and a photopolymerization initiator, and an aqueous-phase component.

The content of the radical polymerization initiator relative to the total solid content of the specified particles is preferably 0.1 mass% to 15 mass%, more preferably 0.5 mass% to 10 mass%, still more preferably 1 mass% to 6 mass%.

Sensitizer

The specified particles may include at least one sensitizer.

When the specified particles include at least one photopolymerization initiator, the specified particles preferably include at least one sensitizer.

When the specified particles contain a sensitizer, decomposition of the photopolymerization initiator caused by irradiation with an actinic energy ray can be further promoted.

The sensitizer is a substance that absorbs a specific actinic energy ray to shift to an electroexcitation state. The sensitizer in the electroexcitation state comes into contact with the photopolymerization initiator to cause an effect such as electron transfer, energy transfer, or generation of heat. This promotes a chemical change of the photopolymerization initiator, specifically, for example, decomposition, or generation of a radical, acid, or base.

Examples of the sensitizer include benzophenone, thioxanthone, isopropylthioxanthone, anthraquinone, 3-acylcoumarin derivative, terphenyl, styryl ketone, 3-(aroylmethylene)thiazoline, camphorquinone, eosine, rhodamine, and erythrosine.

Other preferred examples of the sensitizer include the compound represented by General formula (i) in JP2010-24276A and the compound represented by General formula (I) in JP1994-107718A (JP-H6-107718A).

In particular, the sensitizer is, from the viewpoints of suitability for LED light and the reactivity to the photopolymerization initiator, preferably at least one selected from the group consisting of thioxanthone, isopropylthioxanthone, and benzophenone, more preferably at least one selected from the group consisting of thioxanthone and isopropylthioxanthone, still more preferably isopropylthioxanthone.

When the specified particles include a sensitizer, such sensitizers may be included alone or in combination of two or more thereof.

When the specified particles include a sensitizer, the content of the sensitizer relative to the solid content of the specified particles is preferably 0.1 mass% to 20 mass%, more preferably 0.2 mass% to 15 mass%, still more preferably 0.3 mass% to 10 mass%.

The specified particles including a photopolymerization initiator and a sensitizer can be produced by, for example, emulsifying a mixture provided by mixing together an oil-phase component including the polymer P (or the raw material compounds for producing the polymer P), a radical-polymerizable monomer, a photopolymerization initiator, and a sensitizer, and an aqueous-phase component.

Other component

The specified particles may include, in addition to the above-described components, another component.
The other component may be, for example, a compound including at least one selected from the group consisting of polysiloxane bonds (specifically, divalent polysiloxane groups), monovalent polysiloxane groups, monovalent fluorinated hydrocarbon groups, and divalent fluorinated hydrocarbon groups.

Water

The aqueous dispersion according to the present disclosure contains water.
The water content relative to the total amount of the aqueous dispersion according to the present disclosure is preferably 10 mass% or more, more preferably 20 mass% or more, still more preferably 30 mass% or more, particularly preferably 50 mass% or more.
The upper limit of the water content relative to the total amount of the aqueous dispersion according to the present disclosure is appropriately determined in accordance with the contents of other components, but is, for example, 99 mass%, preferably 95 mass%, more preferably 90 mass%.

Water-soluble organic solvent

The aqueous dispersion according to the present disclosure contains at least one water-soluble organic solvent.
In this case, when the aqueous dispersion is used as an ink, ejection performance of the ink from an inkjet head is ensured.
In the present disclosure, "water-soluble" in "water-soluble organic solvent" means a property of dissolving, in an amount of 1 g or more, in 100 g of water at 25°C.
The amount of the water-soluble organic solvent dissolving in 100 g of water at 25°C is preferably 5 g or more, more preferably 10 g or more.
The water-soluble organic solvent content relative to the total amount of the aqueous dispersion is preferably 1 mass% to 35 mass%, more preferably 5 mass% to 30 mass%, still more preferably 8 mass% to 15 mass%, yet more preferably 10 mass% to 20 mass%.
When the water-soluble organic solvent content is 1 mass% or more and when the aqueous dispersion is used as an ink, the ink ejection performance is further improved.
When the water-soluble organic solvent content is 35 mass% or less, the aqueous-dispersion preservation stability is further improved.
Specific examples of the water-soluble organic solvent are as follows.

- Alcohols (for example, methanol, ethanol, propanol, isopropanol, butanol, isobutanol, secondary butanol, tertiary butanol, pentanol, hexanol, cyclohexanol, and benzyl alcohol)
- Polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol, thiodiglycol, and 2-methylpropanediol)
- Polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether)
- Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine)
- Amides (for example, formamide, N,N-dimethylformamide, and N,N-dimethylacetamide)
- Heterocycles (for example, 2-pyrrolidone, N-methyl-2-pyrrolidone, cyclohexylpyrrolidone, 2-oxazolidone, 1,3-dimethyl-2-imidazolidinone, and $\gamma$-butyrolactone)
- Sulfoxides (for example, dimethyl sulfoxide)
- Sulfones (for example, sulfolane)
- Others (urea, acetonitrile, acetone, and the like)

The aqueous dispersion according to the present disclosure is preferably an ink, more preferably an ink-jet-recording ink.

Coloring agent

When the aqueous dispersion according to the present disclosure is used as an ink, the aqueous dispersion according to the present disclosure may be an ink containing at least one coloring agent (what is called "color ink"), or may be an ink not containing coloring agents (what is called "clear ink").

When the aqueous dispersion contains a coloring agent, the coloring agent is preferably contained outside of the specified particles (in other words, the specified particles do not include the coloring agent).

The coloring agent is not particularly limited, and can be freely selected from publicly known coloring agents such as pigments, water-soluble dyes, and disperse dyes and used. Of these, more preferably, pigments are included because of high weather resistance and high color reproducibility.

Such a pigment is not particularly limited, and can be appropriately selected in accordance with the purpose; examples include publicly known organic pigments and inorganic pigments; other examples include resin particles dyed with dyes, and commercially available pigment dispersions and surface-treated pigments (for example, dispersions of pigments in dispersion media such as water, liquid compounds, or insoluble resins, and pigments surface-treated with resins, pigment derivatives, or the like).

Examples of the organic pigments and inorganic pigments include yellow pigments, red pigments, magenta pigments, blue pigments, cyan pigments, green pigments, orange pigments, purple pigments, brown pigments, black pigments, and white pigments.

In such a case of using, as the coloring agent, a pigment, a pigment dispersing agent may be used as needed.

In the case of using, as the coloring agent, a pigment, a self-dispersible pigment having hydrophilic groups on the surfaces of the pigment particles may be used as the pigment.

For the coloring agent and the pigment dispersing agent, reference can be appropriately made to Paragraphs 0180 to 0200 of JP2014-040529A and Paragraphs 0122 to 0129 of WO2016/052053A.

When the aqueous dispersion according to the present disclosure contains a coloring agent, the content of the coloring agent relative to the total amount of the aqueous dispersion is preferably 0.1 mass% to 20 mass%, more preferably 0.5 mass% to 10 mass%, particularly preferably 0.5 mass% to 5 mass%.

Other component

The aqueous dispersion according to the present disclosure may contain, as needed, in addition to the above-described components, another component.

The other component may be included in the specified particles or may not be included in the specified particles.

The aqueous dispersion according to the present disclosure may contain, as a component that may be included in the specified particles or may not be included in the specified particles, a surfactant, a polymerization inhibitor, or an ultraviolet absorbent, for example.

The aqueous dispersion according to the present disclosure may contain, as needed, outside of the specified particles, a water-soluble polymerizable monomer, a water-soluble photopolymerization initiator, or a water-soluble resin, for example.

For these components, for example, reference can be made to Paragraphs 0134 to 0157 of WO2016/052053A.

HSP distance between amine and polymer P1

In the aqueous dispersion according to the present disclosure, the neutralizer used for forming the salts of anionic groups in the polymer P is preferably an amine. When the polymer in which the salts of anionic groups included in the polymer P have been converted into anionic groups is defined as a polymer P1, the HSP distance between the amine and the polymer P1 (hereafter, referred to as "ΔHSP(A-P1)") is preferably 4.0 $MPa^{1/2}$ or more, more preferably 4.5 $MPa^{1/2}$ or more, still more preferably 5.0 $MPa^{1/2}$ or more. When ΔHSP(A-P1) is 4 $MPa^{1/2}$ or more, ammonium ions forming salts do not excessively move into the particles and anionic groups are present in the surfaces of particles, so that electrostatic repulsion between anionic groups provides improved dispersion stability. The upper limit value of ΔHSP(A-P1) is not particularly limited and is, for example, 15 $MPa^{1/2}$.

ΔHSP(A-P1) is specifically a value calculated by the following Formula (X1).

$$\Delta HSP(A\text{-}P1) = \Sigma(\Delta HSP(A_k\text{-}P1_i) \times m_k \times m_i) \qquad \text{Formula (X1)}$$

In Formula (X1),

k and i each independently represent an integer of 1 or more,
$m_k$ represents the mass fraction (specifically, a value of more than 0 and less than 1) of the k-th amine relative to the total amount of amine contained in the aqueous dispersion,
$m_i$ represents the mass fraction (specifically, a value of more than 0 and less than 1) of the i-th polymer P1 relative to the total amount of the polymer P1 contained in the aqueous dispersion, and
$\Delta HSP(A_k-P1_i)$ represents the HSP distance between the k-th amine and the i-th polymer P1.

The HSP distance is a value correlating with the miscibility between two substances for comparison (hereafter, referred to as Substance 1 and Substance 2). The smaller the HSP distance, the higher the miscibility between Substance 1 and Substance 2.

The HSP distance is determined by substituting δD (dispersion term) (hereafter, referred to as $\delta D_1$ and $\delta D_2$), δP (polar term) (hereafter, referred to as $\delta P_1$ and $\delta P_2$), and δH (hydrogen-bonding term) (hereafter, referred to as $\delta H_1$ and $\delta H_2$) of each of Substance 1 and Substance 2 into Formula (A) below. The δD (dispersion term), δP (polar term), and δH (hydrogen-bonding term) used herein are three parameters constituting HSP (namely, Hansen Solubility Parameters).

More specifically, for example, the HSP distance between the k-th amine and the i-th polymer P1, $\Delta HSP(A_k-P1_i)$ is determined by respectively substituting, into $\delta D_1$, $\delta P_1$, $\delta H_1$, $\delta D_2$, $\delta P_2$, and $\delta H_2$ in Formula (A) below, the dispersion term of the k-th amine, the polar term of the k-th amine, the hydrogen-bonding term of the k-th amine, the dispersion term of the i-th polymer P1, the polar term of the i-th polymer P1, and the hydrogen-bonding term of the i-th polymer P1.

$$\text{HSP distance} = \sqrt{4(\delta D_1 - \delta D_2)^2 + (\delta P_1 - \delta P_2)^2 + (\delta H_1 - \delta H_2)^2} \quad \cdots \text{Formula (A)}$$

For each of compounds corresponding to amines, the dispersion term (δD), the polar term (δP), and the hydrogen-bonding term (δH) are determined in the following manner.

The structural formulas of the compounds are converted, using structural formula editor software (ChemBioDraw Ultra 13.0), into Smiles strings. Subsequently, in the obtained Smiles-string polymers, the bonding points * are written as X, and Y-MB of HSPiP (HSPiP 4th edition 4.1.07) is used to calculate the δD, δP, and δH values of the compounds.

In the i-th polymer corresponding to the polymer P1,

the dispersion term (hereafter, referred to as "δD(polymer i)"),
the polar term (hereafter, referred to as "δP(polymer i)"), and
the hydrogen-bonding term (hereafter, referred to as "δH(polymer i)"),
are determined on the basis of the method described in Journal of Applied Polymer Science, 12, p. 2359 (1968) and provided by K. W. SUH and J. M. CORBETT.

Specifically, δD(polymer i), δP(polymer i), and δH(polymer i) are determined in the following manner.

A sample (namely, the polymer k) (500 mg) is completely dissolved in 10 mL of tetrahydrofuran (THF); to the resultant solution, deionized water is added dropwise until the solution becomes turbid. At the time when the solution becomes turbid, the volume fraction [deionized water/(deionized water + THF)] is defined as Vw.

A sample (namely, each of the polymers) (500 mg) is completely dissolved in 10 mL of tetrahydrofuran (THF); to the resultant solution, hexane is added dropwise until the solution becomes turbid. At the time when the solution becomes turbid, the volume fraction [hexane/(hexane + THF)] is defined as Vh.

The obtained Vw and Vh are used in the following Formulas (D1), (P1), and (H1) to determine individually δD(polymer k), 6P(polymer k), and δH(polymer k).

$$\delta D(\text{polymer k}) = [Vw^{1/2} \times \delta D(W/T) + Vh^{1/2} \times \delta D(H/T)]/[Vw^{1/2} + Vh^{1/2}]$$

Formula (D1)

$$\delta P(\text{polymer k}) = [Vw^{1/2} \times \delta P(W/T) + Vh^{1/2} \times \delta P(H/T)]/[Vw^{1/2} + Vh^{1/2}]$$

Formula (P1)

$$\delta H(\text{polymer k}) = [Vw^{1/2} \times \delta H(W/T) + Vh^{1/2} \times \delta H(H/T)]/[Vw^{1/2} + Vh^{1/2}]$$

Formula (H1)

In Formula (D1), the following parameters are values determined individually using the following formulas.

$$\delta D(W/T) = \delta D(THF) \times (1 - Vw) + \delta D(water) \times Vw$$

$$\delta D(H/T) = \delta D(THF) \times (1 - Vh) + \delta D(hexane) \times Vh$$

$$\delta P(W/T) = \delta P(THF) \times (1 - Vw) + \delta P(water) \times Vw$$

$$\delta P(H/T) = \delta P(THF) \times (1 - Vh) + \delta P(hexane) \times Vh$$

$$\delta H(W/T) = \delta H(THF) \times (1 - Vw) + \delta H(water) \times Vw$$

$$\delta H(H/T) = \delta H(THF) \times (1 - Vh) + \delta H(hexane) \times Vh$$

In the above-described formulas, as the following parameters, the following values are used.

δD(THF) = 16.8
δD(water) = 15.5
δD(hexane) = 14.9
δP(THF) = 5.7
6P(water) = 16
δP(hexane) = 0
δH(THF) = 8
δH(water) = 42.3
δH(hexane) = 0

Note that the polymer P1 is a polymer in which salts of anionic groups included in the polymer P have been converted into the anionic groups.

For calculation of the HSP distance between the amine and the polymer P1, the method of extracting the polymer P included in the aqueous dispersion and converting the salts of anionic groups included in the polymer P into the anionic groups to obtain the polymer P may be, for example, the following method.

First, from the aqueous dispersion serving as the measurement target, components other than particles and water are removed, to prepare an aqueous dispersion of the particles.

The aqueous dispersion prepared (50 g) is subjected to centrifugation under conditions of 80000 rpm and 40 minutes. The supernatant provided by the centrifugation is removed and the particles are collected as the precipitate.

Into Container 1, about 0.5 g of the collected particles are weighed out, and the weighed value W1 (g) is recorded. Subsequently, 60 mL of acetic acid is added, to dilute the particles having been weighed out, to thereby obtain Degree-of-neutralization-measurement sample 1.

The obtained Degree-of-neutralization-measurement sample 1 is titrated using, as a titrant, a 0.1 N (= 0.1 mol/L) solution of perchloric acid in acetic acid, and the titrant volume consumed until the equivalence point is recorded as F1 (mL). Furthermore, the titration is continuously performed, and the titrant volume consumed until the second equivalence point is recorded as F2 (mL). From the titrant volume F2, the number of moles of neutralized anionic groups is calculated.

Relative to 100 g of the aqueous dispersion of particles, the calculated number of moles of an acid (for example, HCl) is added. As a result, the polymer P is converted into the polymer P1. Subsequently, centrifugation is performed under conditions of 80000 rpm and 40 minutes, to remove the supernatant and to collect the precipitate. The precipitate is dissolved in 200 mass% of THF. This solution is added dropwise into 1000 mass% of hexane to obtain, as precipitate, the polymer P1.

HSP distance between polymerizable monomer M and polymer P1

In the aqueous dispersion according to the present disclosure, the HSP distance between the polymerizable monomer M and the polymer P1 (hereafter, referred to as "ΔHSP(M-P1)") is preferably 13 $MPa^{1/2}$ or less, more preferably 12 $MPa^{1/2}$ or less, still more preferably 11 $MPa^{1/2}$ or less. When the ΔHSP(M-P1) is 13 $MPa^{1/2}$ or less, during production of the aqueous dispersion, the aqueous layer and the oil layer are easily emulsified and a stable aqueous dispersion is obtained. The lower limit value of ΔHSP(M-P1) is not particularly limited and is, for example, 0.1 $MPa^{1/2}$.

In the present disclosure, the HSP distance between the polymerizable monomer M and the polymer P1, ΔHSP(M-P1) is a value determined using the following Formula (X2).

$$\Delta HSP(M\text{-}P1) = \Sigma(\Delta HSP(M_q\text{-}P1_j) \times m_q \times m_j) \qquad \text{Formula (X2)}$$

In Formula (X2),

q and j each independently represent an integer of 1 or more,
$m_q$ represents the mass fraction (specifically, a value of more than 0 and less than 1) of the q-th polymerizable monomer M relative to the total amount of the polymerizable monomer M contained in the aqueous dispersion,
$m_j$ represents the mass fraction (specifically, a value of more than 0 and less than 1) of the j-th polymer P1 relative to the total amount of the polymer P1 contained in the aqueous dispersion, and
$\Delta HSP(M_q\text{-}P1_j)$ represents the HSP distance between the q-th polymerizable monomer M and the j-th polymer P1.

For each of compounds corresponding to the polymerizable monomer M, the dispersion term (δD), the polar term (δP), and the hydrogen-bonding term (δH) are determined by the same method as in the above-described amines.

$\Delta HSP(M_q\text{-}P1_j)$ is determined by respectively substituting, into $6D_1$, $\delta P_1$, $\delta H_1$, $\delta D_2$, $\delta P_2$, and $\delta H_2$ in Formula (A) above, the dispersion term of the q-th polymerizable monomer, the polar term of the q-th polymerizable monomer, the hydrogen-bonding term of the q-th polymerizable monomer, the dispersion term of the j-th polymer P1, the polar term of the j-th polymer P1, and the hydrogen-bonding term of the j-th polymer P1.

Method for producing aqueous dispersion

The method for producing the aqueous dispersion according to the present disclosure is not particularly limited. Examples of the method for producing the aqueous dispersion include the following production method A and production method B.

Production method A

The production method A has a step of mixing together an oil-phase component including an organic solvent, the polymer P, and a polymerizable monomer and an aqueous-phase component including water and performing emulsification, to thereby obtain the aqueous dispersion of the specified particles.

The production method A is suitable as a method for producing an aqueous dispersion of specified particles including the polymer P that has the form of a chain polymer.

In the step of obtaining the aqueous dispersion of the specified particles, the above-described oil-phase component and aqueous-phase component are mixed together and emulsifying the resultant mixture to thereby form the

specified particles. The specified particles formed functions as a dispersoid in the aqueous dispersion produced.

Water in the aqueous-phase component functions as a dispersion medium in the aqueous dispersion produced.

Examples of the organic solvent included in the oil-phase component include ethyl acetate and methyl ethyl ketone.

The organic solvent is preferably at least partially removed during formation of the specified particles or after formation of the specified particles.

The oil-phase component can include, in addition to the above-described components, for example, a radical-polymerization initiator and a sensitizer.

In the case of performing the production method A to produce a photocurable aqueous dispersion, the oil-phase component is prepared so as to include, for example, a radical-polymerizable monomer and a radical-polymerization initiator (and, as needed, a sensitizer).

In the case of performing the production method A to produce a thermosetting aqueous dispersion, the oil-phase component is prepared so as to include, for example, a thermally polymerizable monomer.

As long as the aqueous-phase component includes water, it is not particularly limited. The aqueous-phase component may include a neutralizer for neutralizing at least some of the anionic groups in the polymer P.

The aqueous-phase component may include a component other than water and the neutralizer.

In the production method A, the total amount of the oil-phase component and the aqueous-phase component except for the organic solvent and water corresponds to the total solid content of the specified particles in the aqueous dispersion produced.

For preferred ranges of the usage amounts of components that can be used in the production method A, reference can be made to the above-described "Specified particles" section. This reference is made such that, in the above-described "Specified particles" section, "content" and "total solid content of the specified particles" are respectively replaced by "usage amount" and "total amount of the oil-phase component and the aqueous-phase component except for the organic solvent and water".

In the step of obtaining the aqueous dispersion of the specified particles, the process of mixing together the oil-phase component and the aqueous-phase component is not particularly limited, but may be, for example, mixing by stirring.

In the step of obtaining the aqueous dispersion of the specified particles, the process of emulsification is not particularly limited, but may be, for example, emulsification using an emulsification apparatus such as a homogenizer (for example, a dispersing machine).

In the emulsification, the number of revolutions of the dispersing machine is, for example, 5000 rpm to 20000 rpm, preferably 10000 rpm to 15000 rpm.

In the emulsification, the time for revolutions is, for example, 1 minute to 120 minutes, preferably 3 minutes to 60 minutes, more preferably 3 minutes to 30 minutes, still more preferably 5 minutes to 15 minutes.

In the step of obtaining the aqueous dispersion of the specified particles, emulsification may be performed under heating.

The emulsification under heating enables more efficient formation of the specified particles.

In addition, the emulsification under heating facilitates, from the mixture, removal of at least a portion of the organic solvent in the oil-phase component.

In the case of performing the emulsification under heating, the heating temperature is preferably 35°C to 70°C, more preferably 40°C to 60°C.

The step of obtaining the aqueous dispersion of the specified particles may include an emulsification step of emulsifying the mixture (for example, at a temperature of less than 35°C), and a heating step of heating (for example, at a temperature of 35°C or more) the emulsion obtained by the emulsification step.

In such an embodiment in which the step of obtaining the aqueous dispersion of the specified particles includes the emulsification step and the heating step, particularly in the heating step, the specified particles can be more efficiently formed.

In the embodiment in which the step of obtaining the aqueous dispersion of the specified particles includes the emulsification step and the heating step, particularly in the heating step, at least a portion of the organic solvent in the oil-phase component is easily removed from the mixture.

In the heating step, the heating temperature is preferably 35°C to 70°C, more preferably 40°C to 60°C.

In the heating step, the heating time is preferably 6 hours to 50 hours, more preferably 12 hours to 40 hours, still more preferably 15 hours to 35 hours.

The production method A may have, as needed, in addition to the step of obtaining the aqueous dispersion of the specified particles, another step.

The other step may be a step of, after the step of obtaining the aqueous dispersion of the specified particles, adding another component (such as a pigment).

Production method B

The production method B has a step of mixing together an oil-phase component including an organic solvent, the raw material compounds of the polymer P (for example, a tri- or higher functional isocyanate compound and a compound having two or more active hydrogen groups), and a polymerizable monomer, and an aqueous-phase component including water and performing emulsification, to thereby obtain an aqueous dispersion of the specified particles.
The production method B is suitable as a method for producing an aqueous dispersion of specified particles (for example, microcapsules) including the polymer P having the form of a crosslinked polymer.
In the production method B, the oil-phase component includes an organic solvent, the raw material compounds of the polymer P, and a polymerizable monomer.
In the case of performing the production method B to produce a photocurable aqueous dispersion, the oil-phase component is prepared so as to include, for example, the raw material compounds of the polymer P, a radical-polymerizable monomer, and a radical-polymerization initiator (and, as needed, a sensitizer).
In the case of performing the production method B to produce a thermosetting aqueous dispersion, the oil-phase component is prepared so as to include, for example, the raw material compounds of the polymer P and a thermal-polymerizable monomer.
In the case of using the aqueous dispersion according to the present disclosure as an ink, the method for producing the aqueous dispersion according to the present disclosure preferably includes a step of performing the above-described production method A or production method B to produce an aqueous dispersion of specified particles, and a step of adding, to the aqueous dispersion of the specified particles, other components such as a pigment and a water-soluble organic solvent and performing mixing.

Properties

When the aqueous dispersion according to the present disclosure is used as an ink, the aqueous dispersion according to the present disclosure preferably has a viscosity of 3 mPa·s to 15 mPa·s, more preferably 3 mPa·s to 13 mPa·s. In particular, the aqueous dispersion according to the present disclosure set at 25°C preferably has a viscosity of 50 mPa s or less. When the aqueous dispersion has a viscosity in such a range, higher ejection stability can be achieved.
Note that the viscosity of the aqueous dispersion is a value measured using a viscometer.
As the viscometer, for example, a VISCOMETER TV-22 (Toki Sangyo Co., Ltd.) can be employed.

Image recording method

The image recording method according to the present disclosure preferably includes a step of applying, onto a substrate, the aqueous dispersion according to the present disclosure (hereafter, also referred to as "application step"), and a step of irradiating the aqueous dispersion having been applied onto the substrate, with an actinic energy ray (hereafter, also referred to as "irradiation step"). Hereafter, the aqueous dispersion will be described as an ink.

Substrate

The substrate is not particularly limited, may be an impermeable substrate or a permeable substrate, and is preferably an impermeable substrate.
The impermeable substrate used herein refers to a substrate having a water absorption (unit: mass%, measurement time: 24 hours) of less than 10 measured by an ASTM test method according to ASTM D570.
The above-described water absorption of the impermeable substrate is preferably 5 or less.
Examples of the impermeable substrate include:

paper laminated with a plastic (for example, polyethylene, polypropylene, or polystyrene),
metal plates (for example, plates of a metal such as aluminum, zinc, or copper),
plastic films (for example, films of polyvinyl chloride (PVC: Polyvinyl Chloride) resins, cellulose diacetate, cellulose triacetate, cellulose propionate, cellulose butyrate, cellulose acetate butyrate, cellulose nitrate, polyethylene terephthalate (PET: Polyethylene Terephthalate), polyethylene (PE: Polyethylene), polystyrene (PS: Polystyrene), polypropylene (PP: Polypropylene), polycarbonate (PC: Polycarbonate), polyvinyl acetal, or acrylic resins),
paper laminated with or vapor-deposited with the above-described metal,
plastic films laminated with or vapor-deposited with the above-described metal, and leathers.

Examples of the leathers include natural leathers (also referred to as "real leathers"), and synthetic leathers (for example, PVC (polyvinyl chloride) leather and PU (polyurethane) leather). For leathers, for example, reference can

be made to Paragraph 0163 to Paragraph 0165 of JP2009-058750A.

For example, in the case of forming a film on a plastic film or a leather serving as an impermeable substrate (for example, a seat for a vehicle, a bag, a shoe, or a purse), the film is desirably formed to have high rubfastness and high adhesiveness.

Also, in the case of forming a film on a substrate other than leathers and plastic films, the film may be desirably formed to have high rubfastness and high adhesiveness.

The image recording method according to the present disclosure can satisfy such desires.

The substrate may be surface-treated from the viewpoint of improving the surface energy.

Non-limiting examples of such a surface treatment include corona treatment, plasma treatment, flame treatment, heat treatment, abrasion treatment, light irradiation treatment (UV treatment), and flame treatment.

Application step

The application step is a step of applying, onto a substrate, the above-described aqueous dispersion (ink) according to the present disclosure.

The process of applying the ink is not particularly limited and examples include publicly known processes such as the coating process, the ink jet recording process, and the immersion process.

The ink application by an ink jet recording process can be performed by ejecting the ink from an ink jet head in a publicly known ink jet recording apparatus.

The inkjet head is preferably a piezoelectric inkjet head.

The inkjet head preferably has a resolution of 300 dpi or more, more preferably 600 dpi or more, still more preferably 800 dpi or more.

The dpi (dot per inch) used herein represents the number of dots per 2.54 cm (1 inch).

The drop volume (the drop volume per dot) of the ink ejected from the inkjet head is preferably 1 pL (picoliter) to 100 pL, more preferably 3 pL to 80 pL, still more preferably 3 pL to 50 pL.

The substrate has a surface on the side of landing of the ink, the surface having a temperature of, in the application step, preferably 20°C to 80°C, more preferably 25°C to 75°C, still more preferably 30°C to 70°C, yet more preferably 40°C to 70°C.

When the substrate has a surface on the side of landing of the ink, the surface having a temperature of 20°C to 80°C, the image quality and rubfastness of the image are further improved. The reason for this is that the effect of seepage of the polymerizable monomer M from the specified particles is more likely to be provided inferentially.

The image recording method according to the present disclosure preferably satisfies at least one of including a preheating step of heating the substrate before the application step, or performing heating of the substrate and application of the ink in the application step.

This results in further improvement in the image quality and rubfastness of the image. The reason for this is that the effect of seepage of the polymerizable monomer M from the specified particles is more likely to be provided inferentially.

When the recording method X satisfies at least one of the above-described features, the temperature of the surface of the substrate is easily controlled to such a preferred temperature.

In each of the heating in the preheating step and the heating in the application step, heating means for heating the substrate is not particularly limited; examples include a heat drum, hot air, an infrared lamp, an infrared LED, an infrared heater, a heating oven, a hot plate, an infrared laser, and an infrared dryer.

Irradiation step

The irradiation step is a step of irradiating, with an actinic energy ray, the ink having been applied onto the substrate (stated another way, a step of exposing the ink having been applied onto the substrate).

In this step, irradiation with an actinic energy ray (namely, exposure) is performed to polymerize the polymerizable monomer M in the ink to cure the ink, to provide an image. More specifically, as described above, after the ink is landed, the polymerizable monomer M effectively seeps out from the specified particles, so that curing between specified particles (in other words, bonding between specified particles) sufficiently proceeds, which results in an image having high image quality and high rubfastness.

The actinic energy ray may be, for example, ultraviolet radiation (UV light), visible light, or an electron beam. Of these, the actinic energy ray is preferably UV light.

The ink having been applied onto the substrate may be irradiated with an actinic energy ray while the substrate and the ink having been applied onto the substrate are heated.

The irradiation energy (namely, exposure dose) of the actinic energy ray is preferably 20 $mJ/cm^2$ to 5 $J/cm^2$, more preferably 100 $mJ/cm^2$ to 1,500 $mJ/cm^2$.

The irradiation time of the actinic energy ray is preferably 0.01 seconds to 120 seconds, more preferably 0.1 seconds to 90 seconds.

For irradiation conditions and basic irradiation methods using an actinic energy ray, the irradiation conditions and irradiation methods disclosed in JP1985-132767A (JP-S60-132767A) can be applied.

Examples of the light source for irradiation with an actinic energy ray include a mercury lamp, a metal halide lamp, a high-pressure mercury lamp, a medium-pressure mercury lamp, a low-pressure mercury lamp, an ultraviolet fluorescent lamp, a gas laser, a solid-state laser, an LED (light-emitting diode), and an LD (laser diode).

Of these, the light source for irradiation with an actinic energy ray is preferably a light source for irradiation with ultraviolet radiation that is a metal halide lamp, a high-pressure mercury lamp, a medium-pressure mercury lamp, a low-pressure mercury lamp, or an ultraviolet LED (hereafter, also referred to as UV-LED).

The peak wavelength of the ultraviolet radiation is, for example, preferably 200 nm to 405 nm, more preferably 220 nm to 400 nm, still more preferably 340 nm to 400 nm.

The peak wavelength of light (LED light) from the LED light source is preferably 200 nm to 600 nm, more preferably 300 nm to 450 nm, still more preferably 320 nm to 420 nm, yet more preferably 340 nm to 400 nm.

The UV-LED is, for example, a UV-LED manufactured by Nichia Corporation and having a main emission spectrum having a wavelength between 365 nm and 420 nm.

Another example is a UV-LED described in US6,084,250A and configured to emit an actinic radiation with a primary emission between 300 nm and 370 nm.

Some UV-LEDs may be combined to perform irradiation with ultraviolet rays in different wavelength regions.

Particularly preferably the actinic energy ray is LED light, particularly preferably LED light having a peak wavelength in the wavelength region of 340 nm to 405 nm.

For example, more preferred is LED light having a peak wavelength of 355 nm, 365 nm, 385 nm, 395 nm, or 405 nm, and particularly preferred is LED light having a peak wavelength of 355 nm, 365 nm, 385 nm, 395 nm, or 405 nm.

The maximum illuminance of such an LED on the substrate is preferably 10 $mW/cm^2$ to 2,000 $mW/cm^2$, more preferably 20 $mW/cm^2$ to 1,000 $mW/cm^2$, still more preferably 50 $mW/cm^2$ to 800 $mW/cm^2$.

In the image recording method according to the present disclosure, the time from landing of the ink to the starting of irradiation with an actinic energy ray is preferably 1 second or less. When the time is 1 second or less, the image quality of the image is improved, specifically, granularity of the image is suppressed. The lower limit value of the time is not particularly limited and is, for example, 0.01 seconds.

In general, when the time from landing of the ink to the starting of exposure is 1 second or less, in the ink having landed on the substrate, the polymerizable monomer M insufficiently seeps out from the specified particles, which results in degradation of the rubfastness of the image in some cases. However, the image recording method according to the present disclosure uses the ink according to the present disclosure, so that, in spite of the time from landing of the ink to the starting of exposure being 1 second or less, the polymerizable monomer M seeps out from the specified particles, to ensure the rubfastness of the image. Stated another way, advantages due to the ink according to the present disclosure are particularly effectively provided in the case of the image recording method according to the present disclosure in which the time from landing of the ink to the starting of exposure is short.

The ink application and irradiation with an actinic energy ray according to such an embodiment are preferably performed using an ink jet recording apparatus including a unit including an actinic-energy-ray-irradiation ink jet head and an actinic-energy-ray source disposed near the inkjet head.

With this unit, after the ink is ejected from the inkjet head of the unit to land the ink to a substrate, at a timing in a short time of 1 second or less from the landing, irradiation with the actinic energy ray from the actinic-energy-ray source of the unit can be performed.

Drying step

The image recording method according to the present disclosure may further include a drying step of heat-drying the ink having been irradiated with the actinic energy ray.

The heating means for heating the ink is not particularly limited; examples include a heat drum, hot air, an infrared lamp, an infrared LED, an infrared heater, a heating oven, a hot plate, an infrared laser, and an infrared dryer.

In the heat-drying, the heating temperature is preferably 40°C or more, more preferably 40°C to 200°C, still more preferably 40°C to 100°C, yet more preferably 40°C to 80°C, still yet more preferably 45°C to 70°C.

The heating temperature refers to the temperature of the ink on the substrate, and can be measured with a thermograph using an infrared thermography apparatus H2640 (manufactured by Nippon Avionics Co., Ltd.).

The heating time can be appropriately set in accordance with, for example, the heating temperature, the composition of the ink, and printing speed. The heating time is preferably 5 seconds or more, more preferably 5 seconds to 20 minutes, still more preferably 10 seconds to 10 minutes, yet more preferably 20 seconds to 5 minutes.

EXAMPLES

Hereinafter, the present invention will be described more specifically with reference to Examples; however, the present invention within the spirit and scope thereof is not limited to the following Examples.

Synthesis of Polymer PU1

Into a three-neck flask, dimethylolpropionic acid (DMPA) (9.6 g), dicyclohexylmethane-4,4'-diisocyanate (HMDI) (55.0 g), tricyclodecanedimethanol (14.7 g), bisphenol A epoxy diacrylate (25.9 g), and ethyl acetate (66.1 g) were charged and heated to 70°C. To this, 0.2 g of NEOSTANN U-600 (manufactured by Nitto Kasei Co., Ltd., inorganic bismuth catalyst; hereafter, also referred to as "NEOSTANN U-600") was added, and stirring was performed at 70°C for 6 hours.

Subsequently, to this, isopropanol (IPA) (73.6 g) serving as an end-capping agent and ethyl acetate (101.7 g) were added and stirring was performed at 70°C for 3 hours. After the stirring for 3 hours, the reaction solution was left to cool to room temperature (25°C; hereafter, the same definition). Subsequently, ethyl acetate was used to adjust the concentration to thereby obtain a 30 mass% solution of Polymer PU1 (solvent: mixed solution of IPA and ethyl acetate).

Polymer PU1 was found to have a weight-average molecular weight (Mw) of 11000 and an acid value of 0.7 mmol/g.

Polymer PU1 has an acryloyl group as a photopolymerizable group.

Synthesis of Polymer PU2

Into a three-neck flask, dimethylolpropionic acid (DMPA) (16.9 g), dicyclohexylmethane-4,4-diisocyanate (82.5 g), tricyclodecanedimethanol (2.9 g), bisphenol A epoxy diacrylate (77.0 g), and ethyl acetate (102.3 g) were charged and heated to 70°C. To this, 0.2 g of U-600 was added and stirring was performed at 70°C for 5 hours.
Subsequently, to this, isopropanol (IPA) (80 g) serving as an end-capping material and ethyl acetate (110 g) were added, and stirring was performed at 70°C for 3 hours. After the stirring for 3 hours, the reaction solution was left to cool to room temperature. Subsequently, ethyl acetate was used to adjust the concentration to thereby obtain a 30 mass% solution of Polymer 2 (solvent: ethyl acetate).

Polymer PU2 was found to have a weight-average molecular weight (Mw) of 8000 and an acid value of 0.7 mmol/g.

Polymer PU2 has an acryloyl group as a photopolymerizable group.

Synthesis of Polymer PU3

Into a three-neck flask, dimethylolpropionic acid (DMPA) (8.0 g), diisophorone diisocyanate (IPDI) (37.3 g), tricyclodecanedimethanol (9.1 g), bisphenol A epoxy diacrylate (21.6 g), and methyl ethyl ketone (56.2 g) were charged and heated to 70°C. To this, 0.1 g of NEOSTANN U-600 was added, and stirring was performed at 70°C for 6 hours.

Subsequently, to this, isopropanol (IPA) (61.1 g) serving as an end-capping material and methyl ethyl ketone (86.4 g) were added, and stirring was performed at 70°C for 3 hours. After the stirring for 3 hours, leaving to cool to room temperature was performed and, subsequently, methyl ethyl ketone was used to adjust the concentration to thereby obtain a 30 mass% solution of Polymer PU3 (solvent: mixed solvent of IPA and methyl ethyl ketone).

Polymer PU3 was found to have a weight-average molecular weight (Mw) of 11000 and an acid value of 0.7 mmol/g.

Polymer PU3 has an acryloyl group as a photopolymerizable group.

Synthesis of Polymer Acryl

Into a three-neck flask, ethyl acetate (64.9 g) was charged, and stirring was performed at 70°C for 30 minutes under a stream of nitrogen at 20 mL/min. To this, a mixed solution of methacrylic acid (MAA) (6.0 g), methyl methacrylate (60.0 g), n-butyl acrylate (34.0 g), V-65 (manufactured by FUJIFILM Wako Pure Chemical Corporation) (5.4 g), ethyl acetate (10.8 g), and isopropanol (IPA) (32.5 g) under cooling in an ice bath was added dropwise over 4 hours, and stirring under heating for 1 hour was further performed. Subsequently, after heating to 80°C, stirring for 2 hours was performed, leaving to cool to room temperature was performed, and ethyl acetate was used to adjust the concentration to thereby obtain a 30 mass% solution of Polymer Acryl (solvent: mixed solvent of IPA and ethyl acetate).

Polymer Acryl was found to have a weight-average molecular weight (Mw) of 11000 and an acid value of 0.7 mmol/g.

Synthesis of Polymer PU4

Into a three-neck flask, dimethylolpropionic acid (DMPA) (8.0 g), dicyclohexylmethane-4,4-diisocyanate (HMDI) (33.3 g), bisphenol A epoxy diacrylate (21.6 g), T5652 (13.3 g), SILAPLANE FM-DA11 (manufactured by JNC CORPORATION, reactive silicone; hereafter, also referred to as FM-DA11) (11.3 g), and methyl ethyl ketone (56.1 g) were charged and heated to 70°C. To this, 0.1 g of NEOSTANN U-600 was added, and stirring was performed at 70°C for 6 hours.

Subsequently, to this, isopropanol (IPA) (61.0 g) serving as an end-capping material and methyl ethyl ketone (86.2 g) were added, and stirring was performed at 70°C for 3 hours. After the stirring for 3 hours, leaving to cool to room temperature was performed and, subsequently, methyl ethyl ketone was used to adjust the concentration to thereby obtain a 30 mass% solution of Polymer PU4 (solvent: mixed solvent of IPA and methyl ethyl ketone).

Polymer PU4 was found to have a weight-average molecular weight (Mw) of 11000 and an acid value of 0.7 mmol/g.

Polymer PU4 has an acryloyl group as a photopolymerizable group.

Synthesis of Polymer PU5

Into a three-neck flask, dimethylolpropionic acid (DMPA) (8.2 g), hexamethylenediisocyanate (HDI) (37.9 g), tricyclodecanedimethanol (25.4 g), bisphenol A epoxy diacrylate (7.00 g), FM-DA11 (11.7 g), and methyl ethyl ketone (58.2 g) were charged, heated to 70°C, and stirred for 4 hours.

Subsequently, to this, isopropanol (IPA) (63.2 g) serving as an end-capping material and methyl ethyl ketone (89.2 g) were added, and stirring was performed at 70°C for 3 hours. Leaving to cool to room temperature was performed and, subsequently, methyl ethyl ketone was used to adjust the concentration to thereby obtain a 30 mass% solution of Polymer PU5 (solvent: mixed solvent of IPA and methyl ethyl ketone).

Polymer PU5 was found to have a weight-average molecular weight (Mw) of 11000 and an acid value of 0.7 mmol/g.

Polymer PU5 has an acryloyl group as a photopolymerizable group.

Synthesis of Polymer PU6

Into a three-neck flask, dimethylolpropionic acid (DMPA) (10.7 g), diisophorone diisocyanate (IPDI) (37.3 g), bisphenol A epoxy diacrylate (29.0 g), PEG2000 (40.4 g), and methyl ethyl ketone (76.3 g) were charged, heated to 70°C, and stirred for 5 hours.

Subsequently, to this, isopropanol (IPA) (82.2 g) serving as an end-capping material and methyl ethyl ketone (115.5 g) were added, and stirring at 65°C for 3 hours was performed. After the stirring for 3 hours, leaving to cool to room temperature was performed and, subsequently, methyl ethyl ketone was used to adjust the concentration to thereby obtain a 30 mass% solution of PU6 (solvent: mixed solvent of IPA and methyl ethyl ketone).

Polymer PU6 was found to have a weight-average molecular weight (Mw) of 11000 and an acid value of 0.7 mmol/g.

Polymer PU6 has an acryloyl group as a photopolymerizable group.

Example 1

Preparation of oil-phase component

Ethyl acetate (36.4 g), the 30 mass% solution of Polymer PU1 (90.7 g), and diisopropylethylamine serving as a neutralizer were mixed together, and stirred for 1 hour. Tricyclodecanedimethanol diacrylate (product name "SR833S", manufactured by Sartomer) (10.4 g), glycerol propoxy triacrylate (product name "OTA480", manufactured by DAICEL-ALLNEX LTD.) (10.4 g), a photopolymerization initiator (product name "Omnirad819", manufactured by IGM Resins B.V.) (1.7 g), and isopropylthioxanthone (0.4 g) were mixed together, and stirred for 30 minutes to thereby obtain an oil-phase component.

Preparation of aqueous-phase component

Distilled water (135.3 g) and sodium hydroxide serving as a neutralizer were mixed together and stirred for 15 minutes to thereby prepare an aqueous-phase component. The amounts of diisopropylethylamine and sodium hydroxide serving as neutralizers were adjusted such that, of the salts, the content of the salt derived from diisopropylethylamine became 95 mol% and the content of the salt derived from sodium hydroxide became 5 mol%.

The amounts of neutralizers used were adjusted such that, in the specified particles to be produced, the degree of neutralization of anionic groups (specifically, carboxy groups) became 95%.

The specific amounts of the neutralizers were calculated by the following formulas.

Amount of diisopropylethylamine (g) = Total amount of oil-phase component (g) × (Solid content concentration of oil-phase component (mass%)/100) × (Content of Polymer PU1 relative to total solid content of oil-phase component (mass%)/100) × Acid value of Polymer PU1 (mmol/g) × 0.95 × 0.95 × (Molecular weight of diisopropylethylamine (g/mol)/1000)

Amount of sodium hydroxide (g) = Total amount of oil-phase component (g) × (Solid content concentration of oil-phase component (mass%)/100) × (Content of Polymer PU1 relative to total solid content of oil-phase component (mass%)/100) × Acid value of Polymer PU1 (mmol/g) × 0.95 × 0.05 × (Molecular weight of sodium hydroxide (g/mol)/1000)

The oil-phase component and the aqueous-phase component were mixed together; the resultant mixture was emulsified at room temperature using a homogenizer at 7000 rpm for 30 minutes, to obtain an emulsion. To the obtained emulsion, distilled water (48.0 g) was added; the resultant liquid was heated to 50°C, and stirred at 50°C for 5 hours, to thereby distill off ethyl acetate from the liquid. The liquid from which ethyl acetate had been driven off was diluted with distilled water such that the solid content became 20 mass%, to thereby obtain an aqueous dispersion of specified particles.

Preparation of ink (aqueous dispersion including specified particles)

The components of the following composition were mixed together to prepare an ink.

·The aqueous dispersion of specified particles: 50 mass%
·Pigment dispersion liquid (product name "Pro-jet Cyan APD1000" manufactured by FUJIFILM Imaging Colorants, pigment concentration: 14 mass%): 15 mass%
·Fluorine-based surfactant (product name "Capstone FS-31" manufactured by E. I. du Pont de Nemours and Company, solid content: 25 mass%): 0.3 mass%
·Propylene glycol: 15 mass%
·Water: the remainder of 100 mass% in total

Example 2

Ethyl acetate (36.4 g), the 30 mass% solution of Polymer PU1 (90.7 g), and diisopropylethylamine serving as a neutralizer were mixed together, and stirred for 1 hour. Tricyclodecanedimethanol diacrylate (product name "SR833S", manufactured by Sartomer) (10.4 g), polymerizable monomer OTA480 (10.4 g) manufactured by DAICEL-ALLNEX LTD., a photopolymerization initiator (product name "Omnirad819", manufactured by IGM Resins B.V) (1.7 g), and isopropylthioxanthone (0.4 g) were mixed together and stirred for 30 minutes to thereby obtain an oil-phase component.

The amount of neutralizer used was adjusted such that the degree of neutralization of the anionic groups (specifically, carboxy groups) in the specified particles produced became 95%.

The oil-phase component and distilled water (135.3 g) were mixed together, and the resultant mixture was emulsified at room temperature using a homogenizer at 7000 rpm for 30 minutes, to obtain an emulsion. To the obtained emulsion, distilled water (48.0 g) was added; the resultant liquid was heated to 50°C, and stirred at 50°C for 5 hours, to thereby distill off ethyl acetate from the liquid. The liquid from which ethyl acetate had been driven off was diluted with distilled water such that the solid content became 20 mass%, to thereby obtain an aqueous dispersion of specified particles.

The obtained aqueous dispersion of the specified particles was used and the same method as in Example 1 was performed, to prepare an ink.

Example 3 to Example 9

The same method as in Example 2 was performed except that the species of the polymer was changed as described in Table 2-1, to prepare aqueous dispersions of particles and to prepare inks.

Example 10 to Example 14

The same method as in Example 7 was performed except that the species of the neutralizer was changed as described in Table 2-1, to prepare aqueous dispersions of particles and to prepare inks.

Example 15 to Example 18

The same method as in Example 7 was performed except that the species and content of the polymerizable monomer were changed as described in Table 2-1, to prepare aqueous dispersions of particles and to prepare inks.

Comparative Example 1

Preparation of oil-phase component

Ethyl acetate (36.4 g), the 30 mass% solution of Polymer PU1 (90.7 g), polymerizable monomer SR833S manufactured by Sartomer (10.4 g), polymerizable monomer OTA480 manufactured by DAICEL-ALLNEX LTD. (10.4 g), photopolymerization initiator IRGACURE (registered trademark) 819 manufactured by BASF (1.7 g), and isopropylthioxanthone (0.4 g) were mixed together and stirred for 30 minutes to thereby obtain an oil-phase component.

Preparation of aqueous-phase component

Distilled water (135.3 g) and sodium hydroxide serving as a neutralizer were mixed together and stirred for 15 minutes to thereby prepare an aqueous-phase component.

The amount of the neutralizer used was adjusted such that, in the specified particles to be produced, the degree of neutralization of anionic groups (specifically, carboxy groups) became 95%.

The oil-phase component and the aqueous-phase component were mixed together and the resultant mixture was emulsified at room temperature using a homogenizer at 7000 rpm for 30 minutes, to obtain an emulsion. To the obtained emulsion, distilled water (48.0 g) was added; the resultant liquid was heated to 50°C, and stirred at 50°C for 5 hours, to thereby distill off ethyl acetate from the liquid.

The liquid from which ethyl acetate had been distilled off was diluted with distilled water such that the solid content became 20 mass%, to thereby obtain an aqueous dispersion of particles.

The obtained aqueous dispersion of particles was used and the same method as in Example 1 was performed, to prepare an ink.

Comparative Example 2

The same method as in Example 2 was performed except that the species of the neutralizer was changed as described in Table 2-1, to prepare an aqueous dispersion of particles and to prepare an ink.

Comparative Example 3

The same method as in Example 1 was performed except that the molar ratio of the two neutralizers was changed as described in Table 2-1, to prepare an aqueous dispersion of particles and to prepare an ink.

Comparative Example 4

The same method as in Example 1 was performed except that the species of the polymer, the species of the neutralizers, and the molar ratio of two neutralizers were changed as described in Table 2-1, to prepare an aqueous dispersion of particles and to prepare an ink.

Image recording

An ink cartridge of an ink jet recording apparatus (product name "DMP-2850", manufactured by FUJIFILM

Corporation) was filled with such an ink, and an image was recorded in the following manner on a PVC (polyvinyl chloride) film serving as a substrate.

As the PVC film (substrate), "AVERY (registered trademark) 400 GLOSS WHITE PERMANENT" manufactured by AVERY DENNISON CORPORATION was employed.

The substrate was heated such that a surface to which the ink was to be applied (in other words, a surface to which the ink was to be landed) had a temperature of 50°C (preheating step). This preheating was performed using, in DMP-2850, a platen heater disposed on the upstream side in the substrate transport direction relative to the inkjet head.

Onto the heated substrate, the ink was ejected from the ink jet head of the ink jet recording apparatus and applied (application step). For the ink ejection conditions, the resolution was set to 900 dpi (dots per inch) and the drop volume was set to 10 pL per dot. The ink was applied while heating of the substrate was maintained, so that the ink was landed to the surface of the substrate, the surface being maintained at 50°C. The heating of the substrate was maintained using a platen heater disposed, in DMP-2850, under the inkjet head (namely, in the ink application region).

The ink having been applied onto the substrate was irradiated with (in other words, exposed to) UV light (peak wavelength: 395 nm) from a 395 nm LED lamp (product name "PEL UV CURE UNIT", manufactured by PRINTED ELECTRONICS LIMITED) disposed near the ink jet head (irradiation step). The irradiation energy of the UV light was set to 1000 $mJ/cm^2$.

The time from landing of the ink to exposure (specifically, the time from landing of the ink onto the substrate to the starting of irradiation with UV light) was controlled to be 0.10 seconds.

Subsequently, the exposed ink was heat-dried under conditions of 50°C and 180 seconds, to obtain an image (drying step). The ink was heat-dried by bringing a surface of the substrate, the surface being on a side opposite from the ink application surface, into contact with a hot plate.

Evaluations

The inks obtained above were used and evaluated in terms of preservation stability and rubfastness. The evaluation methods are as follows. The evaluation results will be described in Table 2-2.

Preservation stability

After such an ink is prepared, it was stored at room temperature for 1 day. Subsequently, it was left in a sealed state at 60°C for 4 weeks. After the 4 weeks elapsed, the ink was used to record, under the above-described image recording conditions, a single solid image at a recording duty of 100%. The inkjet recording apparatus was terminated for 30 minutes under conditions of 25°C and a relative humidity of 50%, to expose the ink jet head to the air.

After 30 minutes elapsed, a single nozzle check pattern of the inkjet recording apparatus was recorded. The recorded nozzle check pattern was visually observed. On the basis of the number of nozzles turned into a non-ejection state, evaluation in terms of preservation stability was performed. Evaluation ranks will be described below. The highest rank in terms of preservation stability is "A".

Evaluation ranks

A: The number of nozzles turned into a non-ejection state is 0.
B: The number of nozzles turned into a non-ejection state is 1 to 2.
C: The number of nozzles turned into a non-ejection state is 3 to 4.
D: The number of nozzles turned into a non-ejection state is 5 or more.
E: Ejection of the ink was not achieved.

Rubfastness (dry)

A3 cm × 10 cm solid image was recorded under the above-described image recording conditions at a recording duty of 100%. The obtained image recorded product was left under an environment at 25°C at a relative humidity of 50% for 24 hours. The image recorded surface was rubbed 100 times, using a Gakushin-type rubbing tester, under application of a load of 200g, using a cotton fabric (Canequim No. 3: color-fastness-test white fabric). The state of the image having been rubbed was visually observed and, on the basis of the state, evaluation in terms of rubfastness in the dry state was performed. Evaluation ranks will be described below. The highest rank in terms of rubfastness in the dry state is "A".

A: In the image, no rubbing marks were recognized.
B: In the image, a small number of rubbing marks were recognized, but exposure of the substrate was not recognized.
C: In the image recorded surface, the area of exposure of the substrate was more than 0% and less than 5%.
D: In the image recorded surface, the area of exposure of the substrate was 5% or more and less than 50%.
E: In the image recorded surface, the area of exposure of the substrate was 50% or more. Rubfastness (wet)

The same method was performed as in the evaluation in terms of rubfastness in the dry state except that the cotton fabric used in the evaluation in terms of rubfastness in the dry state was changed to a cotton fabric moistened with water, to perform evaluation in terms of rubfastness in the wet state. The evaluation ranks are the same as in the rubfastness in the dry state. The highest rank in terms of rubfastness in the wet state is "A".
Table 1 describes δD, δP, and δH determined by the above-described methods.
Table 2-2 describes ΔHSP(A-P1), which is the HSP distance between the amine and the polymer P1, and ΔHSP(M-P1), which is the HSP distance between the polymerizable monomer M and the polymer P1. ΔHSP(A-P1) and ΔHSP(M-P1) were calculated using δD, δP, and δH determined by the above-described methods. In Table 2-1, the content of the polymerizable monomer M and the content of the polymerizable monomer M1 having a ClogP value of 2 or less individually mean contents relative to the total solid content of the particles. In Solubility in water, "<0.1" means less than 0.1, and ">>12.5" means much more than 12.5.
In Table 1 and Table 2-1, the abbreviations are as follows.

Neutralizers

·DIPEA: diisopropylethylamine
·DIBA: diisobutylamine
·DCHMA: N,N-dicyclohexylmethylamine
·TAA: triamylamine
·4-OH-PMP: 4-hydroxy-1,2,2,6,6-pentamethylpiperidine
·NLDEA: N-lauryldiethanolamine
·DIPA: diisopropylamine
·TEA: triethylamine

Polymerizable monomers M

·TCDDA: tricyclodecanedimethanol diacrylate
·GPO3A: glycerol propoxy triacrylate
·FOM03006: N-[tris(3-acrylamidepropoxymethyl)methyl]acrylamide (product name "FOM-03006", manufactured by FUJIFILM Wako Pure Chemical Corporation)

Table 1

| | | δD | δP | δH |
|---|---|---|---|---|
| Amine | DIPEA | 14.8 | 1.9 | 1.5 |
| | DIBA | 15.3 | 2.3 | 3.3 |
| | DCHMA | 16.8 | 1.9 | 2.5 |
| | TAA | 15.7 | 1.8 | 2.0 |
| | 4-OH-PMP | 16.3 | 3.2 | 7.3 |
| | NLDEA | 16.0 | 5.0 | 15.0 |
| | DIPA | 15.1 | 2.9 | 3.2 |
| | TEA | 14.8 | 2.8 | 2.9 |
| Polymerizable monomer M | SR833S | 17.0 | 3.1 | 3.7 |
| | GPO3A | 16.3 | 3.1 | 6.3 |
| | FOM03006 | 17.4 | 15.9 | 10.9 |

(continued)

| | | δD | δP | δH |
|---|---|---|---|---|
| Polymer P1 | PU1 | 16.4 | 7.4 | 14.4 |
| | PU2 | 16.3 | 7.2 | 15.2 |
| | PU3 | 16.3 | 6.1 | 11.4 |
| | Acryl | 15.7 | 4.8 | 6.2 |
| | PU4 | 16.4 | 6.2 | 11.1 |
| | PU5 | 16.4 | 7.3 | 14.1 |
| | PU6 | 16.2 | 7.9 | 16.7 |

| | Polymer P | | | | | Polymerizable monomer M | | | | | | | |
|---|---|---|---|---|---|---|---|---|---|---|---|---|---|
| | Species | Neutralizer | | | Tg (°C) | Content (mass%) | Monomer 1 | | | Monomer 2 | | | Content of Monomer M1 (mass%) |
| | | Species | Solubility in water (g/100 mL) | ClogP value | | | Species | Ratio (mass%) | ClogP value | Species | Ratio (mass%) | ClogP value | |
| Example 1 | PU1 | DIPEA (95)<br>NaOH (5) | 0.4<br>>> 12.5 | 2.4 | 90 | 50 | TCDDA | 50 | 4.7 | GPO3A | 50 | 4 | 0 |
| Example 2 | PU1 | DIPEA | 0.4 | 2.4 | 90 | 50 | TCDDA | 50 | 4.7 | GPO3A | 50 | 4 | 0 |
| Example 3 | PU2 | DIBA | 0.5 | 2.4 | 86 | 50 | TCDDA | 50 | 4.7 | GPO3A | 50 | 4 | 0 |
| Example 4 | PU3 | DIPEA | 0.4 | 2.4 | 85 | 50 | TCDDA | 50 | 4.7 | GPO3A | 50 | 4 | 0 |
| Example 5 | Acryl | DIPEA | 0.4 | 2.2 | 60 | 50 | TCDDA | 50 | 4.7 | GPO3A | 50 | 4 | 0 |
| Example 6 | PU4 | DIPEA | 0.4 | 2.2 | 69 | 50 | TCDDA | 50 | 4.7 | GPO3A | 50 | 4 | 0 |
| Example 7 | PU5 | DIPEA | 0.4 | 2.2 | 49 | 50 | TCDDA | 50 | 4.7 | GPO3A | 50 | 4 | 0 |
| Example 8 | PU6 | DIPEA | 0.4 | 2.2 | 2 | 50 | TCDDA | 50 | 4.7 | GPO3A | 50 | 4 | 0 |
| Example 9 | PU4 | DCHMA | <0.1 | 4.1 | 69 | 50 | TCDDA | 50 | 4.7 | GPO3A | 50 | 4 | 0 |
| Example 10 | PU4 | TAA | <0.1 | 6.4 | 69 | 50 | TCDDA | 50 | 4.7 | GPO3A | 50 | 4 | 0 |
| Example 11 | PU4 | 4-OH-PMP | 4.8 | 1.4 | 69 | 50 | TCDDA | 50 | 4.7 | GPO3A | 50 | 4 | 0 |
| Example 12 | PU4 | NLDEA | <0.1 | 5 | 69 | 50 | TCDDA | 50 | 4.7 | GPO3A | 50 | 4 | 0 |
| Example 13 | PU4 | DIPA | 10 | 1.2 | 69 | 50 | TCDDA | 50 | 4.7 | GPO3A | 50 | 4 | 0 |
| Example 14 | PU4 | DIPEA | 0.4 | 2.2 | 69 | 50 | TCDDA | 75 | 4.7 | FOM03006 | 25 | -0.2 | 13 |
| Example 15 | PU4 | DIPEA | 0.4 | 2.2 | 69 | 70 | TCDDA | 50 | 4.7 | FOM03006 | 50 | -0.2 | 35 |
| Example 16 | PU4 | DIPEA | 0.4 | 2.2 | 69 | 80 | TCDDA | 25 | 4.7 | FOM03006 | 75 | -0.2 | 60 |
| Example 17 | PU4 | DIPEA | 0.4 | 2.2 | 69 | 75 | TCDDA | 40 | 4.7 | FOM03006 | 60 | -0.2 | 45 |
| Comparative Example 1 | PU1 | NaOH | >>12.5 | - | 90 | 50 | TCDDA | 50 | 4.7 | GPO3A | 50 | 4 | 0 |

(continued)

| | Polymer P | | | | | Polymerizable monomer M | | | | | | | |
|---|---|---|---|---|---|---|---|---|---|---|---|---|---|
| | Species | Neutralizer | | | Tg (°C) | Content (mass%) | Monomer 1 | | | Monomer 2 | | | Content of Monomer M1 (mass%) |
| | | Species | Solubility in water (g/100 mL) | ClogP value | | | Species | Ratio (mass%) | ClogP value | Species | Ratio (mass%) | ClogP value | |
| Comparative Example 2 | PU1 | TEA | 17 | 1.6 | 90 | 50 | TCDDA | 50 | 4.7 | GPO3A | 50 | 4 | 0 |
| Comparative Example 3 | PU1 | DIPEA (90) NaOH (10) | 0.4 >> 12.5 | 2.2 | 90 | 50 | TCDDA | 50 | 4.7 | GPO3A | 50 | 4 | 0 |
| Comparative Example | PU2 4 | DIBA (90) NaOH (10) | 0.5 >>12.5 | 2.4 | 86 | 50 | TCDDA | 50 | 4.7 | GPO3A | 50 | 4 | 0 |

Table 2-2

| | ΔHSP (A-P1) [$MPa^{1/2}$] | ΔHSP (M-P1) [$MPa^{1/2}$] | Evaluations | | |
|---|---|---|---|---|---|
| | | | Preservation stability | Rubfastness | |
| | | | | Dry | Wet |
| Example 1 | 14.4 | 10.3 | C | A | B |
| Example 2 | 14.4 | 10.3 | C | A | A |
| Example 3 | 13.0 | 11.0 | C | A | A |
| Example 4 | 11.2 | 7.2 | B | A | A |
| Example 5 | 5.8 | 2.9 | A | B | A |
| Example 6 | 10.9 | 6.8 | A | A | A |
| Example 7 | 14.1 | 10.0 | A | A | A |
| Example 8 | 16.6 | 12.7 | C | A | B |
| Example 9 | 9.6 | 6.8 | A | A | A |
| Example 10 | 10.1 | 6.8 | B | A | A |
| Example 11 | 4.8 | 6.8 | A | A | A |
| Example 12 | 4.2 | 6.8 | B | A | A |
| Example 13 | 8.9 | 6.8 | C | A | B |
| Example 14 | 10.9 | 5.7 | A | A | A |
| Example 15 | 10.9 | 5.3 | A | A | B |
| Example 16 | 10.9 | 7.1 | B | A | C |
| Example 17 | 10.9 | 5.8 | B | A | B |
| Comparative Example 1 | - | 10.3 | E | A | C |
| Comparative Example 2 | 11.4 | 10.3 | D | A | B |
| Comparative Example 3 | 14.4 | 10.3 | D | A | B |
| Comparative Example 4 | 13.0 | 11.0 | D | A | B |

As described in Tables 2-1 and 2-2, it has been demonstrated that, in Example 1 to Example 17 including particles including the polymer P and the polymerizable monomer M and water wherein the polymer P includes a salt of an anionic group and, of the salt, the content of a salt derived from a neutralizer having a solubility in water at 20°C of 12.5 g/100 mL or less is more than 90 mol%, the aqueous dispersions have high preservation stability.

By contrast, it has been demonstrated that, in Comparative Example 1 and Comparative Example 2 in which the salts of anionic groups included in the polymers are not salts derived from neutralizers having a solubility in water at 20°C of 12.5 g/100 mL or less, the preservation stability based on the above-described evaluation ranks is poor.

It has been demonstrated that, in Comparative Example 3 and Comparative Example 4 in which, of the salts of anionic groups included in the polymers, the contents of the salts derived from the neutralizers having a solubility in water at 20°C of 12.5 g/100 mL or less are 90 mol% or less, the preservation stability based on the above-described evaluation ranks is poor.

It has been demonstrated that, in Example 6 using, as the neutralizer, the amine having a ClogP value of 5.0 or less, the preservation stability is high, compared with Example 10.

It has been demonstrated that, in Example 6 in which the HSP distance between the amine and the polymer P1 is 4.5 $MPa^{1/2}$ or more, the preservation stability is high, compared with Example 12.

It has been demonstrated that, in Example 7 in which the HSP distance between the polymerizable monomer and the polymer P1 is 12 $MPa^{1/2}$ or less, the preservation stability and the rubfastness in the wet state are high, compared with Example 8.

It has been demonstrated that, in Example 17 in which the content of the polymerizable monomer having a ClogP value of 2 or less relative to the total solid content of the particles is 50 mass% or less, the rubfastness in the wet

state is high, compared with Example 16.

It has been demonstrated that, in Example 6 in which the polymer includes at least one bond species selected from the group consisting of a urethane bond and a urea bond, the rubfastness in the dry state is high, compared with Example 5.

It has been demonstrated that, in Example 4 in which the polymer has a glass transition temperature of 85°C or less, the preservation stability is high, compared with Example 2.

Note that the entire contents disclosed by JP2020-163389 filed in the Japan Patent Office on September 29, 2020 are incorporated herein by reference. All the documents, patent applications, and technical standards mentioned in this Specification are incorporated herein by reference to the same extent as in the case where the documents, patent applications, and technical standards are each specifically and individually described as being incorporated herein by reference.

## Claims

**1.** An aqueous dispersion comprising:

particles comprising a polymer P and a polymerizable monomer M; and
water,
wherein the polymer P comprises a salt of an anionic group, and
more than 90 mol% of the salt is a salt derived from a neutralizer having a solubility in water at 20°C of 12.5 g/100 mL or less.

**2.** The aqueous dispersion according to claim 1, wherein the neutralizer is an amine having a ClogP value of 5.0 or less.

**3.** The aqueous dispersion according to claim 1 or claim 2, wherein the neutralizer is an amine, and
an HSP distance between the amine and a polymer P1, which is a polymer that is obtained when the salt of an anionic group included in the polymer P is converted into the anionic group, is 4.5 $MPa^{1/2}$ or more.

**4.** The aqueous dispersion according to any one of claim 1 to claim 3, wherein an HSP distance between the polymerizable monomer M and a polymer P1, which is a polymer that is obtained when the salt of an anionic group included in the polymer P is converted into the anionic group, is 12 $MPa^{1/2}$ or less.

**5.** The aqueous dispersion according to any one of claim 1 to claim 4, wherein the ink has a content of a polymerizable monomer M1 having a ClogP value of 2 or less of 50 mass% or less relative to a total solid content of the particles.

**6.** The aqueous dispersion according to any one of claim 1 to claim 5, wherein the polymer P comprises at least one bond U selected from the group consisting of a urethane bond and a urea bond.

**7.** The aqueous dispersion according to any one of claim 1 to claim 6, wherein the polymer P has a glass transition temperature of 85°C or less.

**8.** The aqueous dispersion according to any one of claim 1 to claim 7, being used as an ink.

**9.** An image recording method comprising:

a step of applying, onto a substrate, the aqueous dispersion according to any one of claim 1 to claim 8; and
a step of irradiating the aqueous dispersion having been applied onto the substrate, with an actinic energy ray.

## INTERNATIONAL SEARCH REPORT

International application No.
PCT/JP2021/024515

A. CLASSIFICATION OF SUBJECT MATTER
Int. Cl. C08F290/06(2006.01)i, C08F291/00(2006.01)i, B41J2/01(2006.01)i, C09D11/30(2014.01)i, C08G18/00(2006.01)i, C08G18/08(2006.01)i, C08G18/67(2006.01)i, B41M5/00(2006.01)i
FI: C08F290/06, C08G18/00 C, C08G18/08 019, C08G18/67, C09D11/30, B41J2/01 127, B41J2/01 501, B41M5/00 120, C08F291/00

According to International Patent Classification (IPC) or to both national classification and IPC

B. FIELDS SEARCHED

Minimum documentation searched (classification system followed by classification symbols)
Int. Cl. C08F290/06, C08F291/00, B41J2/01, C09D11/30, C08G18/00, C08G18/08, C08G18/67, B41M5/00

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 48-26825 A (PPG INDUSTRIES INC.) 09 April 1973 (1973-04-09), claims, p. 9, lower right column, line 12 to p. 10, lower right column, line 11 | 1-7<br>8, 9 |
| X<br>A | CN 110982017 A (QINGYUAN HAOYU CHEMICAL TECHNOLOGY CO., LTD.) 10 April 2020 (2020-04-10), claims, example 2 | 1-3, 6, 7<br>4, 5, 8, 9 |
| A | JP 2007-16146 A (KAO CORP.) 25 January 2007 (2007-01-25) | 1-9 |
| A | WO 2018/030485 A1 (KAO CORP.) 15 February 2018 (2018-02-15) | 1-9 |

☒ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
19.08.2021

Date of mailing of the international search report
31.08.2021

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.
PCT/JP2021/024515

C (Continuation). DOCUMENTS CONSIDERED TO BE RELEVANT

| Category* | Citation of document, with indication, where appropriate, of the relevant passages | Relevant to claim No. |
|---|---|---|
| A | JP 2020-50773 A (RISO KAGAKU CORP.) 02 April 2020 (2020-04-02) | 1-9 |
| A | JP 2017-43653 A (KAO CORP.) 02 March 2017 (2017-03-02) | 1-9 |

Form PCT/ISA/210 (continuation of second sheet) (January 2015)

**INTERNATIONAL SEARCH REPORT**
Information on patent family members

International application No.
PCT/JP2021/024515

| Patent Documents referred to in the Report | Publication Date | Patent Family | Publication Date |
|---|---|---|---|
| JP 48-26825 A | 09.04.1973 | US 4122053 A<br>claims<br>GB 1405435 A<br>DE 2239189 A1<br>FR 2148589 A1 | |
| CN 110982017 A | 10.04.2020 | (Family: none) | |
| JP 2007-16146 A | 25.01.2007 | (Family: none) | |
| WO 2018/030485 A1 | 15.02.2018 | JP 2018-28080 A<br>JP 2020-117725 A<br>US 2019/0169455 A1<br>EP 3498792 A1<br>CN 109563367 A | |
| JP 2020-50773 A | 02.04.2020 | (Family: none) | |
| JP 2017-43653 A | 02.03.2017 | US 2018/0258200 A1<br>WO 2017/033942 A1<br>EP 3342833 A1<br>CN 107922776 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019054019 A
- JP 6584677 B
- JP 6510681 B
- WO 2016052053 A
- JP 2010024276 A
- JP 6107718 A
- JP H6107718 A
- JP 2014040529 A
- JP 2009058750 A
- JP 60132767 A
- JP S60132767 A
- US 6084250 A
- JP 2020163389 A


### Non-patent literature cited in the description


- Crosslinking Agent Handbook. TAISEISHA LTD, 1981
- UV/EB Curing Handbook (Raw Material). Kobunshi Kankokai, 1985
- Applications and Markets of UV/EB Curing Techniques. CMC Publishing Co., Ltd, 1989, 79
- Polyester Resin Handbook. THE NIKKAN KOGYO SHIMBLTN, LTD, 1988
- **K. W. SUH ; J. M. CORBETT.** *Journal of Applied Polymer Science,* 1968, vol. 12, 2359